# FASCICULE DE BREVET EUROPEEN

(11) **EP 3 867 561 B1**
(45) Date de publication et mention de la délivrance du brevet: **21.08.2024**
(21) Numéro de dépôt: 18811883.0
(22) Date de dépôt: 18.10.2018
(51) Int. Cl.: F17C 13/04

(54) **DISPOSITIF DE REMPLISSAGE ET DE SOUTIRAGE DE GAZ**
VORRICHTUNG ZUM BEFÜLLEN UND ENTNEHMEN VON GAS
DEVICE FOR FILLING AND WITHDRAWING GAS

(43) Date de publication de la demande: 25.08.2021
(73) Titulaire: Alcrys Fluid-Control & Services, 13120 Gardanne (FR)
(72) Inventeur: HEYRAL, Olivier, 13590 Meyreuil (FR); ZSIGMOND, Zsolt, 95580 Margency (FR)
(74) Mandataire: Germain Maureau
(86) Numéro de dépôt international: PCT/FR2018/052601
(87) Numéro de publication internationale: WO 2020/079329

(56) Documents cités:
- EP-A1- 2 705 296
- WO-A1-2013/135983
- FR-A1- 2 927 979
- FR-A1- 2 962 521
- US-A- 5 063 976

## Description

La présente invention se rapporte à un dispositif de remplissage et de soutirage de gaz.

Elle concerne plus particulièrement un dispositif de remplissage et de soutirage de gaz comprenant un circuit de soutirage muni d'un raccord de stockage raccordé à un récipient de stockage d'un gaz sous pression et d'un raccord de soutirage raccordé à un organe de soutirage du gaz à pression réduite, et un circuit de remplissage muni d'un raccord de remplissage conformé pour un raccordement avec une source de gaz sous pression pour le remplissage du récipient de stockage.

L'invention trouve une application particulière, et non limitative, dans le remplissage et le soutirage d'hydrogène gazeux pour alimenter un organe de soutirage de type pile à combustible, en particulier au sein d'un véhicule.

Pour soutirer du gaz sous haute pression, classiquement entre 350 et 700 bars pour les réservoirs de stockage d'hydrogène gazeux, afin de le distribuer à basse pression, classiquement entre 1 et 5 bars, il est indispensable de recourir à un dispositif ou robinet de remplissage et de soutirage de gaz qui va avoir pour fonction de permettre un raccordement avec une source de pression dans le but de remplir lorsque nécessaire le récipient de stockage, et aussi de contrôler les opérations de soutirage de gaz parmi lesquelles figurent les opérations d'isolement, de sécurité et de détente du gaz.

L'état de la technique peut être illustré par l'enseignement du document WO 2013/135983 qui divulgue un robinet de remplissage et de soutirage de gaz, dans lequel est prévu un circuit de sécurité raccordé au circuit de soutirage et comprenant une soupape de sécurité pour évacuer vers l'extérieur le contenu du réservoir en cas de situation dangereuse (température et/ou pression excessive).

Il est par ailleurs connu du document WO 2013/014355 d'employer un raccord de remplissage intégrant un clapet d'isolation qui est ouvert lors du remplissage et qui est fermé lors de la déconnexion avec la source de gaz sous pression.

A la fin du remplissage du récipient de stockage, le raccord de remplissage doit être désaccouplé avec la source de gaz sous pression, ce qui nécessite un retour à la pression atmosphérique à l'intérieur du raccord de remplissage, en amont du clapet d'isolation intégré. Pour ce faire, il est connu de prévoir un système de purge intégré à la source de gaz sous pression et qui a pour fonction d'assurer une dépressurisation en amont du raccord de remplissage pour permettre le désaccouplement. Cependant, en cas défaillance de ce système de purge, se posent alors des problèmes de sécurité et de manipulation au niveau du raccord de remplissage.

La présente invention a notamment pour but de résoudre l'inconvénient précité en proposant un dispositif de remplissage et de soutirage de gaz qui permette d'assurer une dépressurisation nécessaire au désaccouplement entre le raccord de remplissage et la source de gaz sous pression, même en cas de défaillance du système de purge intégré à la source de gaz sous pression.

Un autre but de l'invention est de proposer un dispositif de remplissage et de soutirage intégrant toutes les fonctions garantissant une régulation du gaz en toute sécurité, incluant les fonctions de remplissage, de soutirage, de détente et de sécurité, en particulier vis-à-vis des risques de fuite vers l'extérieur ou vers l'aval.

Un autre but de l'invention est de proposer un dispositif de remplissage et de soutirage à la fois d'encombrement et de poids réduits.

A cet effet, elle propose un dispositif de remplissage et de soutirage de gaz, comprenant :
- un circuit de soutirage comprenant une extrémité amont munie d'un raccord de stockage conformé pour un raccordement avec un récipient de stockage d'un gaz sous pression, et une extrémité aval munie d'un raccord de soutirage conformé pour un raccordement avec un organe de soutirage du gaz à pression réduite, où ledit circuit de soutirage comprend au moins une vanne d'isolation pilotée et au moins un détendeur ;
- un circuit de remplissage comprenant une extrémité amont munie d'un raccord de remplissage conformé pour un raccordement avec une source de gaz sous pression pour le remplissage du récipient de stockage, et une extrémité aval raccordée à l'extrémité amont du circuit de soutirage ;
ledit dispositif étant remarquable en ce que le raccord de remplissage comprend un piston définissant intérieurement une conduite de remplissage et présentant au moins un orifice de purge débouchant transversalement dans ladite conduite de remplissage, où ledit piston est mobile au moins à l'intérieur d'un corps de purge muni d'une conduite de purge raccordée à un circuit de fuite reliée à l'extérieur, ladite conduite de purge débouchant en périphérie du piston entre deux joints d'étanchéité montés autour du piston, ledit piston étant déplaçable sélectivement entre :
- une position d'ouverture établissant une communication entre ladite conduite de remplissage et l'extrémité amont du circuit de remplissage, et dans laquelle l'orifice de purge ne coïncide pas avec la conduite de purge ; et
- une position de fermeture coupant la communication entre ladite conduite de remplissage et l'extrémité amont du circuit de remplissage, et dans laquelle l'orifice de purge coïncide avec la conduite de purge pour établir une communication entre ladite conduite de remplissage et le circuit de fuite.

Ainsi, lors du désaccouplement entre le raccord de remplissage et la source de gaz sous pression, le piston est déplacé vers la position de fermeture, plaçant ainsi l'orifice de purge en coïncidence avec la conduite de purge, contribuant à permettre une dépressurisation automatique via une purge canalisée vers le circuit de fuite et donc vers l'extérieur. Cette purge automatique lors du désaccouplement est effectuée en toute sécurité, car la conduite de purge débouche en périphérie du piston entre deux joints d'étanchéité montés autour du piston, ce qui procure une double barrière d'étanchéité sécurisée.

Selon une caractéristique, le raccord de remplissage comprend un clapet d'isolement mobile relativement à un siège entre une position amont de fermeture de la conduite de remplissage et une position aval d'ouverture de la conduite de remplissage, où le piston est déplaçable sélectivement entre :
- sa position d'ouverture dans laquelle ledit piston agit sur ledit clapet d'isolement vers sa position aval et
- sa position de fermeture dans laquelle ledit piston n'agit pas sur ledit clapet d'isolement qui est sollicité vers sa position amont au moyen d'un organe de rappel.

Ainsi, lors du désaccouplement entre le raccord de remplissage et la source de gaz sous pression, la dépressurisation automatique s'effectue automatiquement en amont de ce clapet d'isolement, qui se ferme avant la mise en coïncidence entre l'orifice de purge et la conduite de purge.

Selon une autre caractéristique, le piston est déplaçable par vissage/dévissage. De manière générale, le piston est déplaçable par toute action mécanique garantissant un déplacement en translation du piston entre sa position d'ouverture et sa position de fermeture, où le piston reste connecté de manière étanche sur le raccord de remplissage. En variante, le piston est déplaçable avec un mécanisme à quart de tour ou autre mécanisme équivalent.

Dans une réalisation particulière, le raccord de stockage comprend une conduite principale raccordée à l'extrémité amont du circuit de soutirage et une conduite de fuite raccordée au circuit de fuite et débouchant entre deux joints d'étanchéité concentriques.

Ainsi, en cas de fuite au niveau de la conduite principale, si le gaz de fuite passe un premier joint d'étanchéité, il s'orientera naturellement vers la conduite de fuite, et donc vers le circuit de fuite, plutôt de que de passer un second joint d'étanchéité, assurant ainsi une complète sécurité au niveau de ce raccord de stockage.

Dans un mode de réalisation particulier, le au moins un détendeur comprend :
- une chambre haute pression en entrée,
- une chambre basse pression en sortie,
- une pièce de régulation mobile sur laquelle appuie d'un côté le gaz de la chambre basse pression et de l'autre côté un organe de rappel,
- un clapet de régulation coopérant avec la pièce de régulation et mobile relativement à un siège de détente entre une position amont de fermeture de la communication entre la chambre basse pression et la chambre haute pression et une position aval d'ouverture de la communication entre la chambre basse pression et la chambre haute pression,
où, lorsque la pression du gaz dans la chambre basse pression dépasse un seuil prédéfini, le clapet de régulation est en position amont et la chambre basse pression est mise en communication avec une conduite de décharge raccordée au circuit de fuite.

Ainsi, le dispositif présente une sécurité supplémentaire avec une fermeture du détendeur en cas de surpression en aval du détendeur (côté organe de soutirage), et une évacuation du gaz en surpression vers le circuit de fuite, garantissant la sécurité de l'équipement.

Avantageusement, cette conduite de décharge est encadrée par deux joints d'étanchéité montés autour du détendeur dans l'alésage de réception du détendeur.

Selon une possibilité de l'invention, le circuit de soutirage comprend deux détendeurs en série, où chaque détendeur présente une conduite de décharge raccordée au circuit de fuite et mise en communication avec la chambre basse pression correspondante lorsque la pression du gaz dans ladite chambre basse pression dépasse un seuil prédéfinie propre à chaque détendeur.

L'emploi de deux détendeurs en série permet de fiabiliser la régulation de la pression entre le récipient de stockage à haute pression et l'organe de soutirage fonctionnant à basse pression.

Selon une autre possibilité de l'invention, le circuit de fuite comprend un clapet anti-retour, ce qui permet une collecte en un seul point des gaz circulant dans le circuit de fuite et issus des différents composants (raccords, détendeur(s), ...) du dispositif, et ainsi limiter les trous de communication vers l'extérieur.

Avantageusement, le dispositif comprend en outre un circuit de sécurité ayant une extrémité amont raccordée à l'extrémité amont du circuit de soutirage et une extrémité aval reliée à l'extérieur, ledit circuit de sécurité comprenant au moins une soupape de sécurité choisie parmi une soupape de sécurité haute pression et/ou une soupape de sécurité haute température.

Conformément à une autre caractéristique de l'invention, le circuit de sécurité comprend un robinet de purge avec limiteur de débit, placé en parallèle de la au moins une soupape de sécurité.

Selon une variante, le circuit de fuite comprend une soupape de sécurité haute pression ayant une entrée raccordée à l'extrémité amont du circuit de soutirage.

L'invention se rapporte également à une utilisation d'un dispositif de remplissage et de soutirage selon l'invention, dans lequel le raccord de stockage est raccordé à un récipient de stockage d'hydrogène gazeux sous pression et le raccord de soutirage est raccordé à un organe de soutirage du type pile à combustible.

D'autres caractéristiques et avantages de la présente invention apparaîtront à la lecture de la description détaillée ci-après, d'un exemple de mise en oeuvre non limitatif, faite en référence aux figures annexées dans lesquelles :
- la figure 1 est une vue schématique illustrant la structure d'un exemple possible de réalisation d'un dispositif de remplissage et de soutirage selon l'invention ;

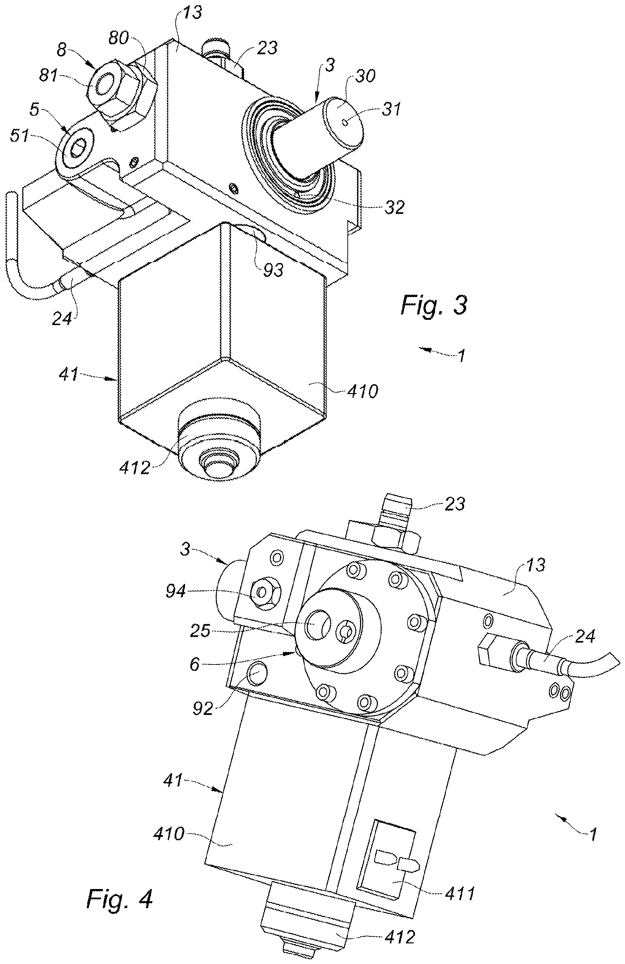

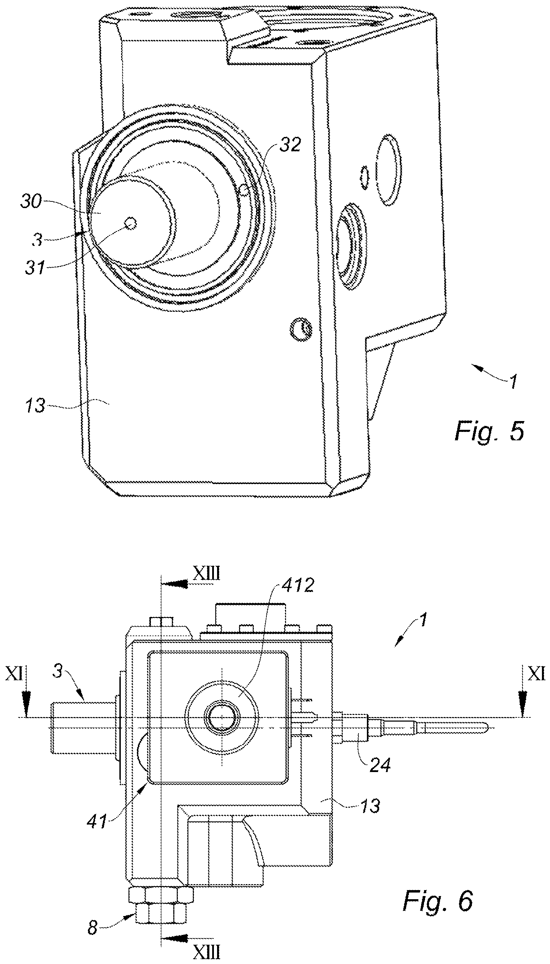

- les figures 2 à 5 sont des vues schématiques en perspective et selon différents angles de vue d'un dispositif de remplissage et de soutirage selon l'invention ;
- les figures 6 et 7 sont des vues schématiques de côté du dispositif des figures 2 à 5 ;
- les figures 8 et 9 sont des vues schématiques en coupe d'un raccord de remplissage du dispositif des figures 2 à 7, dans une position d'ouverture (figure 8) et dans une position de fermeture (figure 9) ;
- la figure 10 est une vue schématique en coupe du dispositif des figures 2 à 7 selon le plan de coupe X-X de la figure 7 ;
- la figure 11 est une vue schématique en coupe du dispositif des figures 2 à 7 selon le plan de coupe XI-XI de la figure 6 ;

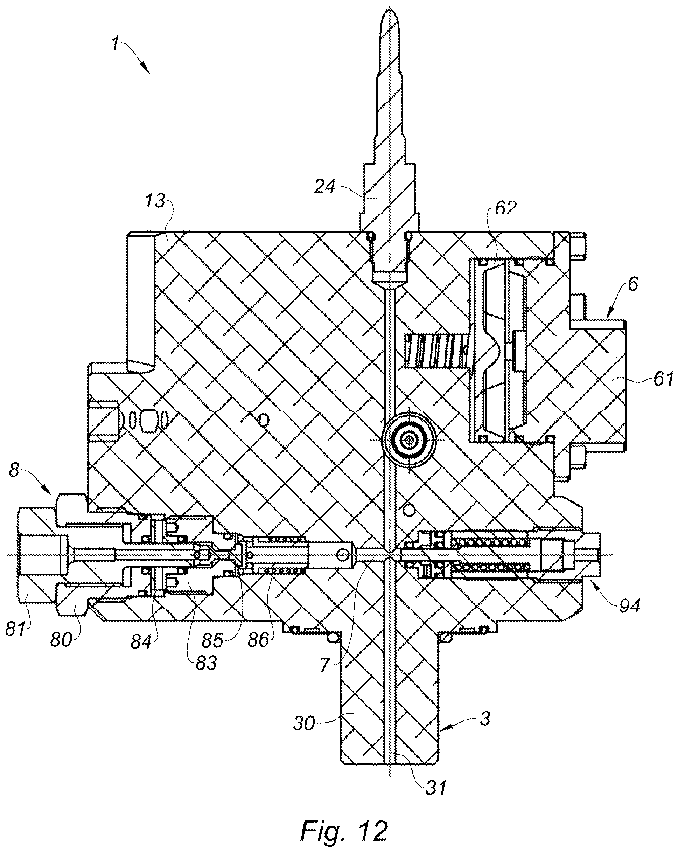

- la figure 12 est une vue schématique en coupe du dispositif des figures 2 à 7 selon le plan de coupe XII-XII de la figure 7 ;
- la figure 13 est une vue schématique en coupe du dispositif des figures 2 à 7 selon le plan de coupe XIII-XIII de la figure 6 ;

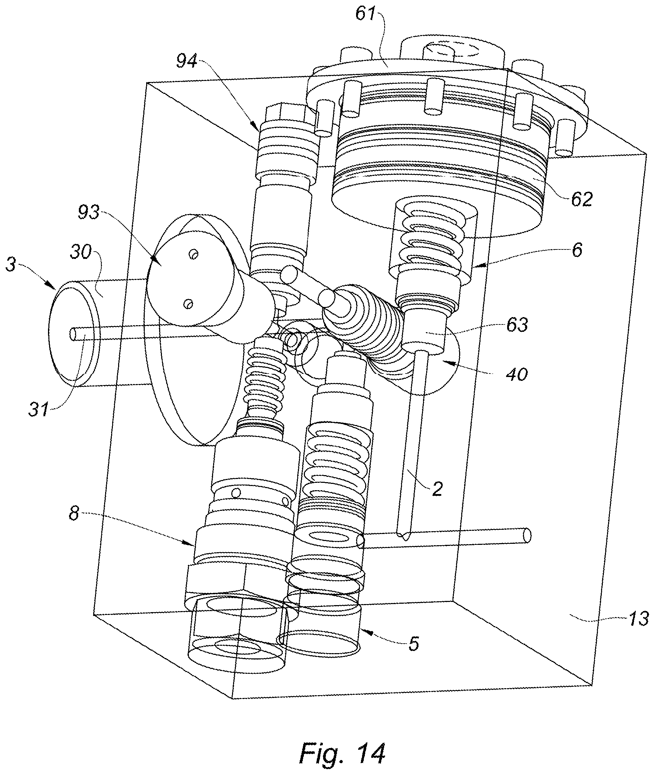

- la figure 14 est une vue schématique en perspective et partiellement transparente du dispositif des figures 2 à 7 ;
- les figures 15 à 18 sont des vues schématiques en perspective du dispositif des figures 2 à 7 coupé selon différents plans de coupe ;
- la figure 19 est une vue schématique en coupe d'une soupape de sécurité basse pression du dispositif des figures 2 à 7, illustrée dans un corps d'essai (et pas dans le corps du dispositif) pour des raisons de clarté ;
- la figure 20 est une vue schématique en coupe d'une vanne d'isolation pilotée du dispositif des figures 2 à 7, illustrée dans un corps d'essai, sans représentation de la motorisation ;
- les figures 21 et 22 sont des vues schématiques en coupe d'un premier détendeur, ou détendeur haute pression, du dispositif des figures 2 à 7, dans une configuration ouverte de repos ou de régulation (figure 21) et dans une configuration fermée de décharge en cas de surpression dans la chambre basse pression (figure 22) ;
- la figure 23 est une vue schématique de côté du premier détendeur des figures 21 et 22 ;
- les figures 24 à 27 sont des vues schématiques en coupe d'un second détendeur, ou détendeur basse pression, du dispositif des figures 2 à 7, dans une configuration verrouillée interdisant la régulation (figure 24), dans une configuration déverrouillée en première phase de réarmement après remontée du doigt obturateur (figure 25), dans une configuration déverrouillée en seconde phase d'armement (figure 26), dans une configuration ouverte de régulation (figure 27) ;
- la figure 28 est une vue schématique de côté du second détendeur des figures 24 et 27 ;
- la figure 29 est une vue zoomée sur une partie de la figure 13 illustrant schématiquement et en coupe une soupape de sécurité haute pression du dispositif des figures 2 à 7 ;
- la figure 30 est une vue schématique en coupe de la soupape de sécurité haute pression de la figure 29, illustrée dans un corps d'essai ;
- les figures 31 et 32 sont des vues schématiques en coupe d'une soupape de sécurité haute température du dispositif des figures 2 à 7, illustrée dans un corps d'essai, en configuration ouverte au-dessus d'une température seuil (figure 31) et en configuration fermée en-dessous de la température seuil (figure 32).

Un dispositif 1 de remplissage et de soutirage de gaz selon l'invention comprend un circuit de soutirage 2 comprenant :
- une extrémité amont 21 munie d'un raccord de stockage 3 conformé pour un raccordement avec un récipient de stockage RE d'un gaz sous pression, et
- une extrémité aval 22 munie d'un raccord de soutirage 25 conformé pour un raccordement avec un organe de soutirage (non illustré) du gaz à pression réduite.

Entre ces deux extrémités 21, 22, le circuit de soutirage 2 comprend successivement, en partant de l'extrémité amont 21, une vanne d'isolation pilotée 4, un premier détendeur 5 et un second détendeur 6. Le circuit de soutirage 2 comprend également, en amont de la vanne d'isolation pilotée 4, une sonde de température 23 et une sonde de pression 24.

Le premier détendeur 5 est associé à, ou intègre, une soupape de décharge 50 disposée en aval entre le circuit de soutirage 2 et un circuit de fuite 10, où cette soupape de décharge 50 est configurée pour une décharge vers le circuit de fuite 10 en cas de surpression en aval, c'est-à-dire en cas de dépassement de la pression aval au-delà d'une première pression seuil prédéfinie (appelée aussi valeur de réglage ou valeur de tarage).

Autrement dit, si la pression aval dépasse cette première pression seuil, un clapet de décharge de la soupape de décharge 50 est soulevé en opposition à la force d'un organe de rappel, de sorte que la soupape de décharge 50 s'ouvre afin que la pression aval diminue dans le circuit de fuite 10 (côté sortie). La soupape de décharge 50 se referme dès que la pression aval devient inférieure à la première pression seuil.

Le second détendeur 6 est associé à, ou intègre, une soupape de décharge 60 disposée en aval entre le circuit de soutirage 2 et le circuit de fuite 10, où cette soupape de décharge 60 est configurée pour une décharge vers le circuit de fuite 10 en cas de surpression en aval, c'est-à-dire en cas de dépassement de la pression aval au-delà d'une seconde pression seuil prédéfinie (appelée aussi valeur de réglage ou valeur de tarage).

Autrement dit, si la pression aval dépasse cette seconde pression seuil, un clapet de décharge de la soupape de décharge 60 est soulevé en opposition à la force d'un organe de rappel, de sorte que la soupape de décharge 60 s'ouvre afin que la pression aval diminue dans le circuit de fuite 10 (côté sortie). La soupape de décharge 60 se referme dès que la pression aval devient inférieure à la seconde pression seuil.

Ce second détendeur 6 est suivi d'un limiteur de débit 600 avec un système de sécurité 601 avec réarmement manuel pour fermer le circuit de soutirage 2 en cas de baisse de la pression aval.

Le dispositif 1 comprend également un circuit de remplissage 7 comprenant une extrémité amont 71 munie d'un raccord de remplissage 8 conformé pour un raccordement avec une source de gaz sa sous pression pour le remplissage du récipient de stockage RE, et une extrémité aval 72 raccordée à l'extrémité amont 21 du circuit de soutirage 2.

Le dispositif 1 comprend un circuit de sécurité 9 ayant :
- une extrémité amont 91 raccordée à l'extrémité amont 21 du circuit de soutirage 2 ; et
- une extrémité amont 92 reliée à l'extérieur EXT, cette extrémité amont 92 formant un point de collecte sur l'extérieur.

Ce circuit de sécurité 9 comprend, en parallèle, une soupape de sécurité haute pression 93, une soupape de sécurité haute température 94 et un robinet de purge 95 avec limiteur de débit. Le robinet de purge 95 a pour fonction principale de permettre une vidange contrôlée du récipient de stockage RE.

Le dispositif 1 comprend le circuit de fuite 10 ayant :
- une sortie reliée à l'extérieur EXT, et plus spécifiquement reliée à l'extrémité amont 92 du circuit de sécurité 9, et
- des entrées raccordées à différents organes du dispositif 1, comme décrit ultérieurement, et notamment aux soupapes de sécurité 50, 60.

Ce circuit de fuite 10 comprend un clapet anti-retour 11 et une soupape de sécurité basse pression 12 ayant :
- une entrée raccordée à l'extrémité aval 22 du circuit de soutirage 2, en aval du second détendeur 6 et aussi du limiteur de débit 600 ; et
- une sortie d'échappement raccordée en amont du clapet anti-retour 11.

Dans le dispositif 1 décrit, le circuit de sécurité 9 et le circuit de fuite 10 sont en communication, et forment ensemble un seul et même circuit relié à l'extérieur EXT.

La suite de la description porte sur un exemple de réalisation de ce dispositif 1, dans une version compacte, légère, fiable et sécurisée.

Ce dispositif 1 comprend un corps 13 dans lequel sont ménagés des alésages formant des canalisations du circuit de soutirage 2, du circuit de remplissage 7, du circuit de fuite 10 et du circuit de sécurité 9, ainsi que des cavités de réception pour les différents organes du dispositif 1.

Le raccord de stockage 3 comprend un connecteur 30 cylindrique en saillie d'une face qui est traversé par une conduite principale 31 raccordée à l'extrémité amont 21 du circuit de soutirage 2, ce connecteur 30 étant prévu pour être connecté sur le récipient de stockage RE de sorte que le gaz circule dans la conduite principale 31. Bien entendu, la forme du connecteur 30 va dépendre de l'interface de connexion du récipient de stockage RE.

Le raccord de stockage 3 comprend également une conduite de fuite 32 raccordée au circuit de fuite 10 et débouchant entre deux joints d'étanchéité 33, 34 concentriques ; ces joints d'étanchéité 33, 34 étant positionnés autour du connecteur 30. Ainsi, une double barrière d'étanchéité est prévue entre la conduite de fuite 32 pour une sécurité optimale en cas de fuite au niveau du connecteur 30.

La vanne d'isolation pilotée 4 comprend une vanne 40 commandée par un organe moteur 41 entre une position de fermeture du circuit de soutirage 2 et une position d'ouverture du circuit de soutirage, avec l'action complémentaire d'un organe de rappel 42 qui sollicite la vanne 40 vers la position de fermeture en l'absence d'actionnement de l'organe moteur 41.

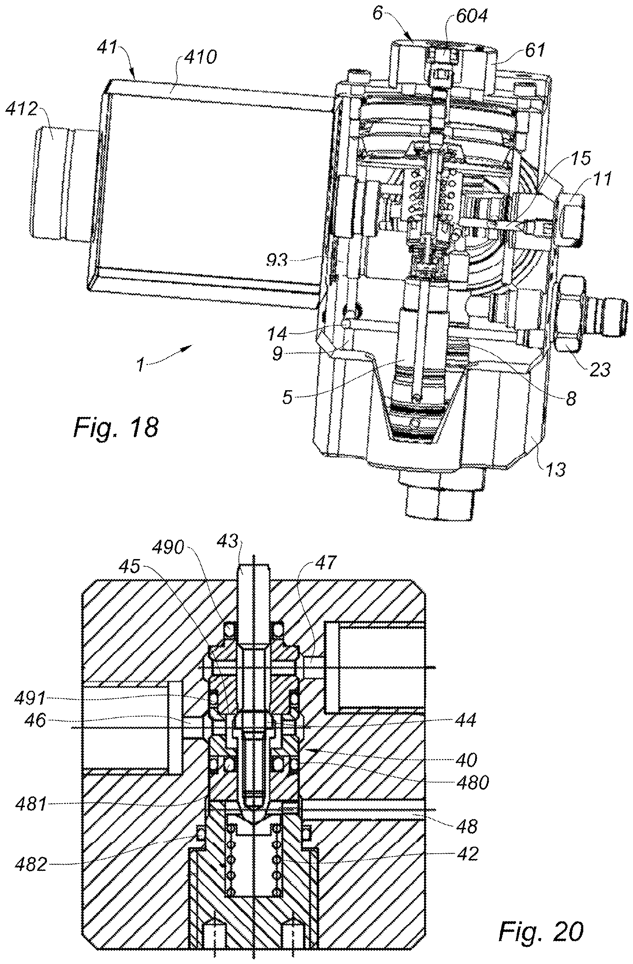

En référence à la figure 20, la vanne 40 comprend un piston 43 déplaçable sous l'action de l'organe moteur 41, ce piston 43 présentant un clapet d'isolement 44 qui prend appui sur un siège 45. L'organe moteur 41 commande le déplacement du piston 43 dans le sens d'un décollement du clapet d'isolement 44 vis-à-vis du siège 45 pour une ouverture de la vanne 40 entre son entrée 46 et sa sortie 47. L'organe de rappel 42, notamment du type ressort hélicoïdal, exerce quant à lui un effort sur le piston 43 pour le solliciter dans le sens d'un recollement du clapet d'isolement 44 sur le siège 45 pour une fermeture de la vanne 40.

La vanne 40 intègre une conduite de fuite 48 raccordée au circuit de fuite 10 et disposée en amont du clapet d'isolement 44, pour évacuer vers le circuit de fuite 10 d'éventuelles fuites au niveau de l'alésage réceptionnant la vanne 40 et également au niveau du piston 43 mobile. Cette conduite de fuite 48 est encadrée par des joints d'étanchéité 480, 481, 482 qui garantissent une double barrière d'étanchéité dans la gestion des fuites.

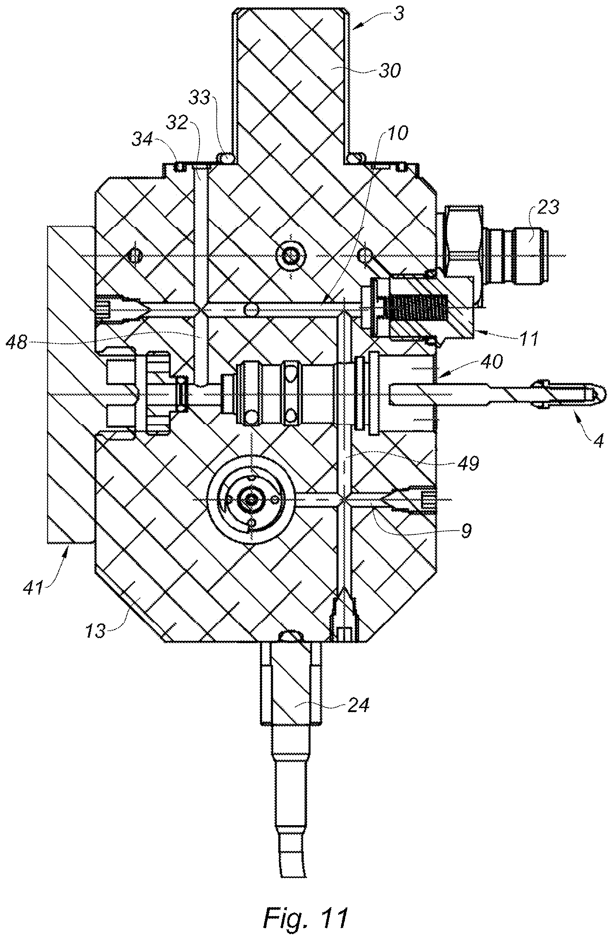

La vanne 40 intègre une autre conduite de fuite 49 (visible sur la figure 11) raccordée au circuit de fuite 10 et disposée en aval du clapet d'isolement 44, pour évacuer vers le circuit de fuite 10 d'éventuelles fuites au niveau de l'alésage réceptionnant la vanne 40 et également au niveau du piston 43 mobile. Cette conduite de fuite 49 est encadrée par des joints d'étanchéité 490, 491 qui garantissent une double barrière d'étanchéité dans la gestion des fuites.

L'organe moteur 41 est monté dans un carter moteur 410 fixé sur le corps 13 et une prise électrique 411 est prévue sur l'extérieur du carter moteur 410. Une molette 412 est également prévue sur l'extérieur du carter 410, où cette molette 412 permet de désactiver et de retirer l'organe moteur 41, de sorte que seul l'organe de rappel 42 agit dans le sens de la fermeture de la vanne 40.

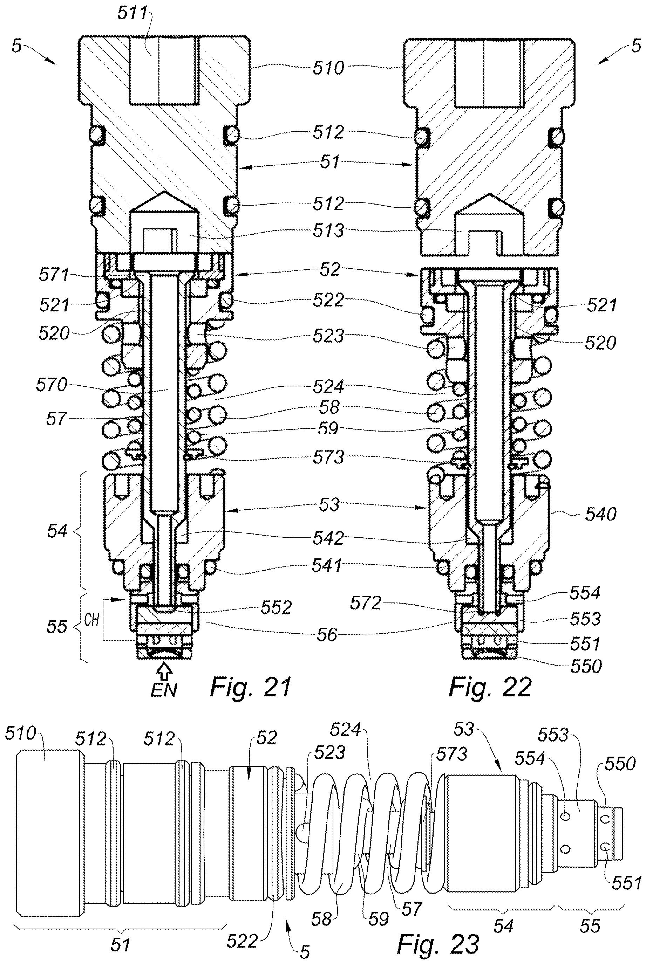

Le premier détendeur 5 est décrit ci-après en référence aux figures 21 à 23, où ce premier détendeur 5 est monté à l'intérieur d'un alésage dont le fond est en communication avec la sortie de la vanne 40.

Ce premier détendeur 5 comprend un corps aval 51 statique formant un couvercle ou bouchon accessible de l'extérieur et muni d'un filetage externe 510 pour une fixation par vissage dans le corps 13, ce corps aval 51 présentant :
- sur une face supérieure, un trou supérieur 511 borgne pour un outil de vissage/dévissage,
- en périphérie extérieure, deux joints d'étanchéité 512 toriques en-dessous du filetage externe 510, et
- sur une face inférieure opposée à la face supérieure, une cavité formant une chambre basse pression 513 en sortie du premier détendeur 5, cette chambre basse pression 513 étant reliée à l'entrée du second détendeur 6.

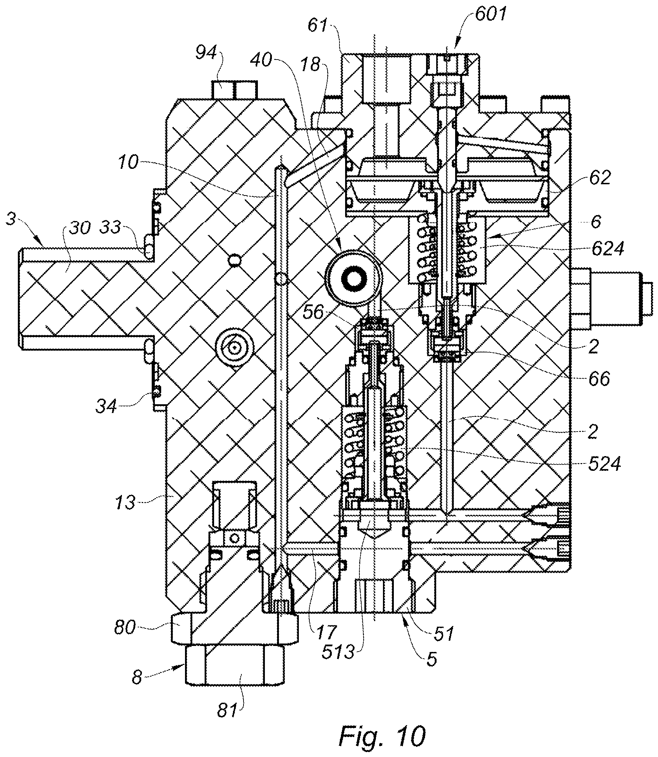

Une conduite de fuite 17 (visible sur la figure 10) ménagée dans le corps 13 est raccordée au circuit de fuite 10 et débouche dans l'alésage du premier détendeur 5 entre les deux joints d'étanchéité 512, avec à nouveau une double barrière d'étanchéité.

Ce premier détendeur 5 comprend une pièce de régulation formée d'un piston 52 mobile conformé pour venir en appui sur la face inférieure du corps aval 51, ce piston 52 étant muni en périphérie extérieure d'un joint d'étanchéité 522 torique, et présentant un canal interne 520 traversant ayant :
- une extrémité supérieure, du côté du corps aval 51, faisant face à la chambre basse pression 513 et formant un siège de décharge 521, et
- une extrémité inférieure 523 opposée qui débouche sur une chambre intermédiaire 524.

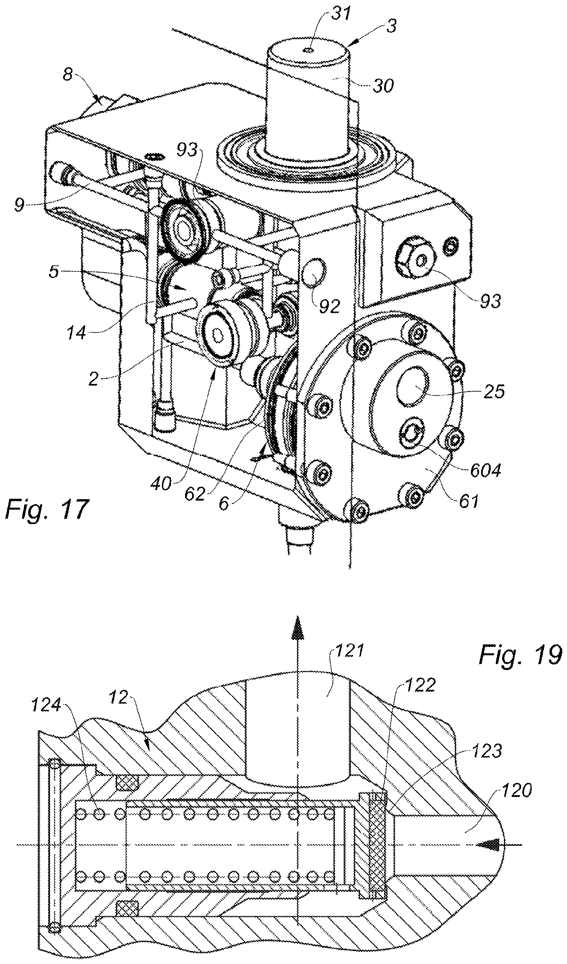

Ce premier détendeur 5 comprend un corps amont 53 statique présentant une portion supérieure 54 prolongée par une portion inférieure 55, où la portion supérieure 54 fait face au piston 52 de sorte que la chambre intermédiaire 524 est délimitée entre le piston 52 et la portion supérieure 54 du corps amont 53. La chambre intermédiaire 524 est reliée au circuit de fuite 10 ou au circuit de sécurité 9, via une conduite de décharge 14 ménagée dans le corps 13 et visible sur les figures 17 et 18.

La portion supérieure 54 est munie d'un filetage externe 540 pour une fixation par vissage dans le corps 13, et plus spécifiquement une fixation au fond de l'alésage correspondant, jusqu'à ce que cette portion supérieure 54 soit en butée sur un épaulement interne de l'alésage via un joint d'étanchéité 541.

Le corps amont 53 délimite avec le fond de l'alésage, sous l'épaulement interne, une chambre haute pression 56 en entrée du premier détendeur 5, cette chambre haute pression 56 étant reliée à la sortie de la vanne 40.

La portion supérieure 54 présente un canal interne 542 traversant ayant une extrémité supérieure qui débouche sur la chambre intermédiaire 524 et une extrémité inférieure qui débouche sur la chambre haute pression 56.

La portion inférieure 55 présente une coupole inférieure 550 en appui sur le fond de l'alésage pour une entrée EN du gaz sous haute pression, où cette coupole inférieure 550 est muni de trous latéraux 551 débouchant dans la chambre haute pression 56.

La coupole inférieure 550 présente une face supérieure en regard de l'extrémité inférieure du canal interne 542, et une cavité est formée dans cette face supérieure pour former un siège de détente 552.

La portion inférieure 55 comprend une paroi cylindrique 553 qui entoure la face supérieure de la coupole inférieure 550, où cette paroi cylindrique 553 est munie de trous latéraux 554 débouchant dans la chambre haute pression 56.

Ainsi, en entrée, le gaz entre à l'intérieur de la coupole inférieure 550 comme schématisé par la flèche EN sur la figure 21, puis le gaz sort dans la chambre haute pression 56 par les trous latéraux 551 et entre au niveau du siège de détente 552 par les trous latéraux 554 comme schématisé par la flèche CH sur la figure 21. Ce cheminement du gaz participe avantageusement à la fonction de détente du gaz recherchée.

Ce premier détendeur 5 comprend une tige de soupape 57 tubulaire munie d'un canal interne 570, la tige de soupape 57 traversant à la fois le canal interne 520 du piston 52 et le canal interne 542 de la portion supérieure 54 du corps amont 53, de sorte que cette tige de soupape 57 présente :
- une extrémité supérieure évasée formant un clapet de décharge 571 propre à venir en appui sur le siège de décharge 521 (autrement dit sur l'extrémité supérieure du canal interne 520) ; et
- une extrémité inférieure formant un clapet de régulation 572 propre à venir en appui sur le siège de détente 552.

Le clapet de régulation 572 est mobile relativement au siège de détente 552 entre :
- une position amont de fermeture de la communication entre la chambre basse pression 513 et la chambre haute pression 56 (via le canal interne 570), dans lequel le clapet de régulation 572 est en butée sur le siège de détente 552 ; et
- une position aval d'ouverture de la communication entre la chambre basse pression 513 et la chambre haute pression 56 (via le canal interne 570), dans lequel le clapet de régulation 572 est décollé vis-à-vis du siège de détente 552.

Le clapet de décharge 571 est mobile relativement au siège de décharge 521 entre :
- une position amont de fermeture de la communication entre la chambre basse pression 513 et la chambre intermédiaire 524 (via le canal interne 520), dans lequel le clapet de décharge 571 est en butée sur le siège de décharge 521 ; et
- une position aval d'ouverture de la communication entre la chambre basse pression 513 et la chambre intermédiaire 524 (via le canal interne 520), dans lequel le clapet de décharge 571 est décollé vis-à-vis du siège de décharge 521.

Ce premier détendeur 5 comprend également un premier organe de rappel 58, en l'occurrence un ressort hélicoïdal, comprimé entre le piston 52 et le corps amont 53 et sollicitant le piston 52 en direction du corps aval 51 (autrement dit dans le sens d'un plaquage du piston 52 contre le corps aval 51).

Ce premier détendeur 5 comprend également un second organe de rappel 59, en l'occurrence un ressort hélicoïdal, comprimé entre le piston 52 et un plateau 573 solidaire de la tige de soupape 57. Ce second organe de rappel 59 s'étend à l'intérieur du premier organe de rappel 58, et le plateau 573 peut par exemple être formé d'un circlips serré autour de la tige de soupape 57. Ce second organe de rappel 59 sollicite la tige de soupape 57, relativement au piston 52, dans le sens d'un plaquage du clapet de décharge 571 contre le siège de décharge 521, autrement dit dans le sens du clapet de décharge 571 vers la position amont de fermeture.

La description qui suit porte sur le fonctionnement du premier détendeur 5.

En référence à la figure 21, dans une configuration de repos, c'est-à-dire en l'absence de pression en entrée (vanne 40 fermée) et en sortie du premier détendeur 5 :
- le piston 52 est en butée sur la face inférieure du corps aval 51 sous l'action du premier organe de rappel 58,
- le clapet de décharge 571 est en en position amont de fermeture sous l'action du second organe de rappel 59, et
- le clapet de régulation 572 est en position aval d'ouverture, de sorte que le premier détenteur 5 est ouvert.

En référence à la figure 21, dans une configuration de régulation, c'est-à-dire avec la présence d'une pression haute en entrée (vanne 40 ouverte) à réguler pour délivrer une pression réduite en sortie :
- le clapet de régulation 572 est en position aval d'ouverture et la détente s'effectue au niveau du siège de détente 552, le gaz passant dans le canal interne 570 de la tige de soupape 57 pour atteindre la chambre basse pression 513 ;
- la pression dans la chambre basse pression 513 agit sur le piston 52 dans le sens d'un décollement vis-à-vis du corps aval 51, de sorte que la régulation s'établit dans le premier détendeur 5 ; et
- le clapet de décharge 571 est en en position amont de fermeture sous l'action du second organe de rappel 59

En référence à la figure 22, dans une configuration fermée de décharge en cas de surpression dans la chambre basse pression 513, c'est-à-dire dans le cas où la pression aval (ou pression dans la chambre basse pression 513) dépasse une première pression seuil prédéfinie (qui dépend des surfaces d'appui du gaz et des coefficients de rappel des organes de rappel 58, 59) :
- la surpression dans la chambre basse pression 513 agit sur le piston 52 dans le sens d'un décollement vis-à-vis du corps aval 51 suffisant pour que le clapet de régulation 572 soit en position amont de fermeture, sous l'effet du second organe de rappel 59 qui pousse la tige de soupape 57 ;
- la tige de soupape 57 étant en butée sur le siège de détente 552 et le piston 52 étant suffisamment écarté du corps aval 51, le clapet de décharge 571 décolle du siège de décharge 521 et passe ainsi en position aval d'ouverture, autorisant la communication entre la chambre basse pression 513 et la conduite de décharge 14 raccordée au circuit de fuite 10, et ainsi la décharge s'effectue dans le circuit de fuite 10 et la pression aval est relâchée.

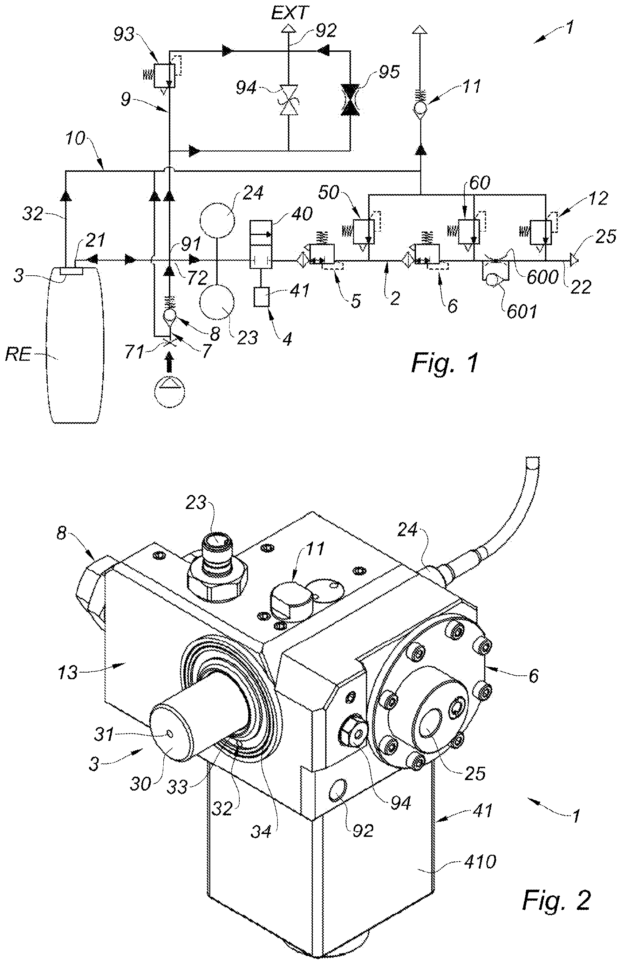

Dans ce premier détendeur 5, le clapet de décharge 571 et le second organe de rappel 59 forment ensemble la soupape de décharge 50 évoquée précédemment en référence à la figure 1.

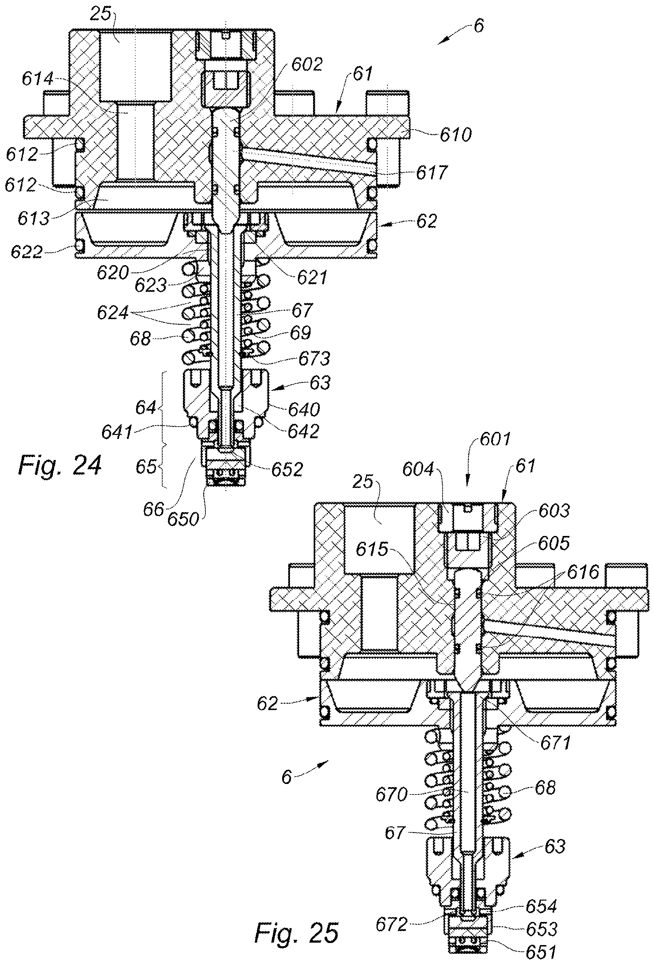

Le second détendeur 6 est décrit ci-après en référence aux figures 24 à 28, où ce second détendeur 6 est monté à l'intérieur d'un alésage dont le fond est en communication avec la sortie du premier détendeur 5.

Ce second détendeur 6 comprend un corps aval 61 statique formant un couvercle ou bouchon accessible de l'extérieur et muni d'un palier périphérique 610 pour une fixation au moyen de plusieurs vis sur le corps 13, ce corps aval 61 présentant :
- en périphérie extérieure, deux joints d'étanchéité 612 toriques en-dessous du palier périphérique 610,
- sur une face supérieure (ou externe), un orifice taraudé formant le raccord de soutirage 25 (raccord femelle) à l'extrémité aval 22 du circuit de soutirage 2 ; et
- sur une face inférieure opposée à la face supérieure, une cavité formant une chambre basse pression 613 en sortie du second détendeur 6, cette chambre basse pression 613 étant reliée au raccord de soutirage 25 via une conduite intérieure 614.

Une conduite de fuite 18 (visible sur la figure 10) ménagée dans le corps 13 est raccordée au circuit de fuite 10 et débouche dans l'alésage du second détendeur 6 entre les deux joints d'étanchéité 612, avec à nouveau une double barrière d'étanchéité.

Ce second détendeur 6 comprend une pièce de régulation formée d'un piston 62 mobile conformé pour venir en appui sur la face inférieure du corps aval 61, ce piston 62 étant muni en périphérie extérieure d'un joint d'étanchéité 622 torique, et présentant un canal interne 620 traversant ayant :
- une extrémité supérieure, du côté du corps aval 61, faisant face à la chambre basse pression 613 et formant un siège de décharge 621, et
- une extrémité inférieure 623 opposée qui débouche sur une chambre intermédiaire 624.

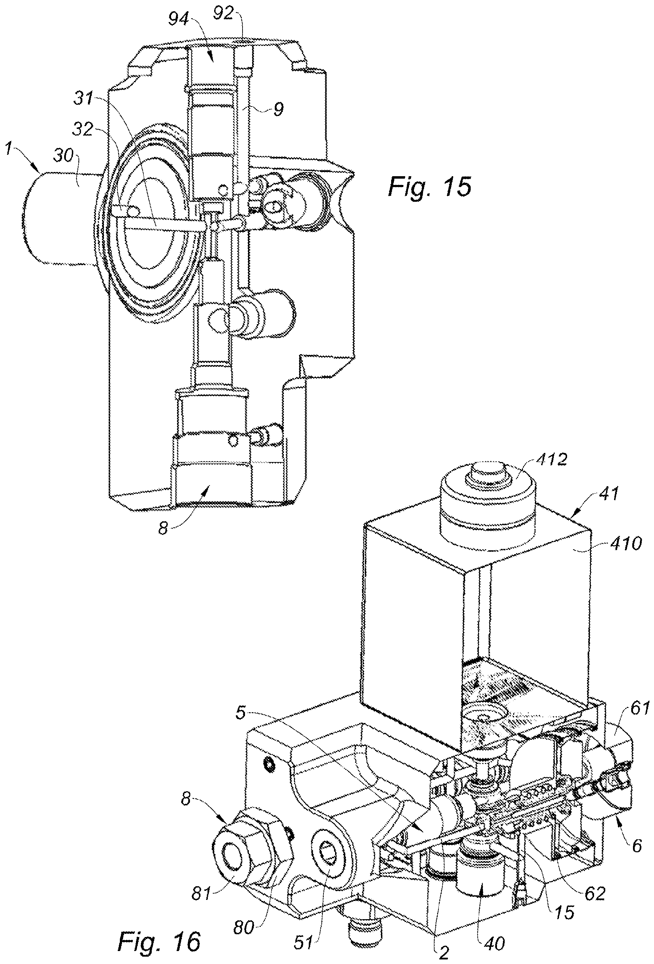

Ce second détendeur 6 comprend un corps amont 63 statique présentant une portion supérieure 64 prolongée par une portion inférieure 65, où la portion supérieure 64 fait face au piston 62 de sorte que la chambre intermédiaire 624 est délimitée entre le piston 62 et la portion supérieure 64 du corps amont 63. La chambre intermédiaire 624 est reliée au circuit de fuite 10 ou au circuit de sécurité 9, via une conduite de décharge 15 ménagée dans le corps 13 et visible sur les figures 16 et 18.

La portion supérieure 64 est munie d'un filetage externe 640 pour une fixation par vissage dans le corps 13, et plus spécifiquement une fixation au fond de l'alésage correspondant, jusqu'à ce que cette portion supérieure 64 soit en butée sur un épaulement interne de l'alésage via un joint d'étanchéité 641.

Le corps amont 63 délimite avec le fond de l'alésage, sous l'épaulement interne, une chambre haute pression 66 en entrée du second détendeur 6, cette chambre haute pression 66 étant reliée à la sortie du premier détendeur 5, autrement dit à la chambre basse pression 513 de ce premier détendeur 5.

La portion supérieure 64 présente un canal interne 642 traversant ayant une extrémité supérieure qui débouche sur la chambre intermédiaire 624 et une extrémité inférieure qui débouche sur la chambre haute pression 66.

La portion inférieure 65 présente une coupole inférieure 650 en appui sur le fond de l'alésage pour une entrée EN du gaz sous haute pression, où cette coupole inférieure 650 est muni de trous latéraux 651 débouchant dans la chambre haute pression 66.

La coupole inférieure 650 présente une face supérieure en regard de l'extrémité inférieure du canal interne 642, et une cavité est formée dans cette face supérieure pour former un siège de détente 652.

La portion inférieure 65 comprend une paroi cylindrique 653 qui entoure la face supérieure de la coupole inférieure 650, où cette paroi cylindrique 653 est munie de trous latéraux 654 débouchant dans la chambre haute pression 66.

Ainsi, en entrée, le gaz entre à l'intérieur de la coupole inférieure 650, puis le gaz sort dans la chambre haute pression 66 par les trous latéraux 651 et entre au niveau du siège de détente 652 par les trous latéraux 654. Ce cheminement du gaz participe avantageusement à la fonction de détente du gaz recherchée.

Ce second détendeur 6 comprend une tige de soupape 67 tubulaire munie d'un canal interne 670, la tige de soupape 67 traversant à la fois le canal interne 620 du piston 62 et le canal interne 642 de la portion supérieure 64 du corps amont 63, de sorte que cette tige de soupape 67 présente :
- une extrémité supérieure évasée formant un clapet de décharge 671 propre à venir en appui sur le siège de décharge 621 (autrement dit sur l'extrémité supérieure du canal interne 620) ; et
- une extrémité inférieure formant un clapet de régulation 672 propre à venir en appui sur le siège de détente 652.

Le clapet de régulation 672 est mobile relativement au siège de détente 652 entre :
- une position amont de fermeture de la communication entre la chambre basse pression 613 et la chambre haute pression 66 (via le canal interne 670), dans lequel le clapet de régulation 672 est en butée sur le siège de détente 652 ; et
- une position aval d'ouverture de la communication entre la chambre basse pression 613 et la chambre haute pression 66 (via le canal interne 670), dans lequel le clapet de régulation 672 est décollé vis-à-vis du siège de détente 652.

Le clapet de décharge 671 est mobile relativement au siège de décharge 621 entre :
- une position amont de fermeture de la communication entre la chambre basse pression 613 et la chambre intermédiaire 624 (via le canal interne 620), dans lequel le clapet de décharge 671 est en butée sur le siège de décharge 621 ; et
- une position aval d'ouverture de la communication entre la chambre basse pression 613 et la chambre intermédiaire 624 (via le canal interne 620), dans lequel le clapet de décharge 671 est décollé vis-à-vis du siège de décharge 621.

Ce second détendeur 6 comprend également un premier organe de rappel 68, en l'occurrence un ressort hélicoïdal, comprimé entre le piston 62 et le corps amont 63 et sollicitant le piston 62 en direction du corps aval 61 (autrement dit dans le sens d'un plaquage du piston 62 contre le corps aval 61).

Ce second détendeur 6 comprend également un second organe de rappel 69, en l'occurrence un ressort hélicoïdal, comprimé entre le piston 62 et un plateau 673 solidaire de la tige de soupape 67. Ce second organe de rappel 69 s'étend à l'intérieur du premier organe de rappel 68, et le plateau 673 peut par exemple être formé d'un circlips serré autour de la tige de soupape 67. Ce second organe de rappel 69 sollicite la tige de soupape 67, relativement au piston 62, dans le sens d'un plaquage du clapet de décharge 671 contre le siège de décharge 621, autrement dit dans le sens du clapet de décharge 671 vers la position amont de fermeture.

Ce second détendeur 6 est ainsi relativement proche du premier détendeur décrit précédemment, avec une première différence qui réside dans une différence dans les dimensionnements car la pression en amont du second détendeur 6 correspond à la pression en aval du premier détendeur 5, autrement dit à la pression détendue par ce premier détendeur 5.

Le premier détendeur 5 a pour fonction de détendre une haute pression, notamment de l'ordre de 350 à 700 bars, afin de délivrer en sortie une moyenne pression, notamment de l'ordre de 10 à 30 bars, et le second détendeur 6 a pour fonction de détendre cette moyenne pression, notamment de l'ordre de 10 à 30 bars, afin de délivrer en sortie une faible pression, notamment de l'ordre de 0,5 à 5 bars.

Ainsi, le piston 62 du second détendeur 6 présente une face supérieure dont la superficie est supérieure à celle du piston 52 du premier détendeur 5. Les organes de rappel 68, 69 présentent également des coefficients de rappel différents de ceux des organes de rappel 58, 59.

Une seconde différence est que le second détendeur 6 comprend un système de sécurité 601, avec réarmement manuel, en cas de chute de pression dans la chambre basse pression 613 (équivalent à un sur-débit en sortie du second détendeur 6) qui traduirait une fuite en aval, et en particulier une fuite dans l'organe de soutirage.

Un tel système de sécurité 601 présente les fonctions suivantes :
- obturer la communication entre la chambre basse pression 613 et la chambre haute pression 66 dans le cas où la pression aval (pression dans la chambre basse pression 613) passe en-dessous d'une pression seuil basse PSB (ou valeur de consigne) ;
- interdire une remise en fonctionnement du second détendeur 6 tant que le défaut de chute de pression (ou de fuite dans l'organe de soutirage) n'est pas résolu ;
- permettre une remise en fonctionnement du second détendeur 6 uniquement par un réarmement manuel, une fois résolu le défaut de chute de pression (ou de fuite dans l'organe de soutirage).

La pression seuil basse PSB peut être établie en considérant une valeur maximale QM de débit du gaz en sortie du second détendeur 6 qui est considérée comme un seuil haut à ne pas dépasser pour le débit car traduisant un dysfonctionnement au niveau de l'organe de soutirage pouvant correspondre à une fuite. Cette valeur maximale QM est ensuite à rapprocher d'une différence entre la pression nominale en sortie du second détendeur 6 (qui correspond à la pression d'utilisation par l'organe de soutirage) et la pression seuil basse PSB.

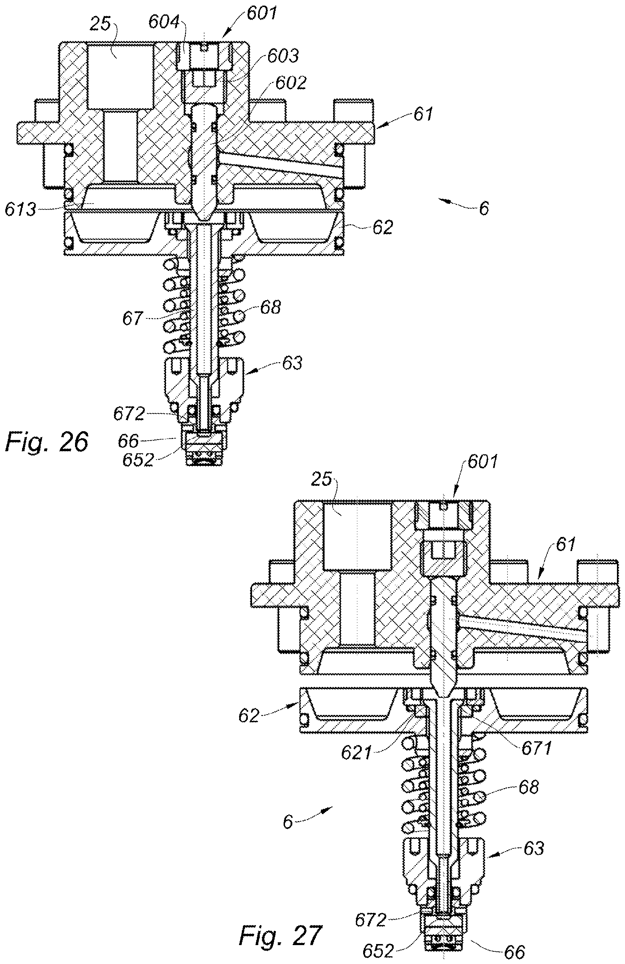

Ce système de sécurité 601 comprend un doigt obturateur 602 monté mobile dans le corps aval 61 en regard de l'extrémité supérieure ouverte de la tige de soupape 67, où ce doigt obturateur 602 est déplaçable sélectivement entre :
- une position abaissée (visible sur les figures 24 et 27) dans laquelle le doigt obturateur 602 est rapproché de l'extrémité supérieure ouverte de la tige de soupape 67 et est ainsi apte à boucher cette extrémité supérieure pour fermer la communication entre la chambre basse pression 613 et la chambre haute pression 66 ; et
- une position relevée (visible sur les figures 25 et 26) dans laquelle le doigt obturateur 602 est éloigné de l'extrémité supérieure ouverte de la tige de soupape 67.

Ce doigt obturateur 602 est monté coulissant dans un orifice 615 ménagé traversant dans le corps aval 61, avec interposition de deux joints d'étanchéité 616 toriques ; une conduite de fuite 617 raccordée au circuit de fuite 10 est ménagée dans le corps aval 61 en débouchant dans l'orifice 615 entre les deux joints d'étanchéité 616.

Ce système de sécurité 601 comprend une vis de réglage 603 vissée dans un filetage prévu dans l'orifice 615, au-dessus du doigt obturateur 602, cette vis de réglage 603 étant accessible de l'extérieur pour permettre de déplacer sélectivement le doigt obturateur 602 en vissant/dévissant la vis de réglage 603 qui vient en butée sur le doigt obturateur 602.

Ce système de sécurité 601 comprend une vis d'arrêt 604 qui est également vissée dans un filetage prévu dans l'orifice 615, au-dessus de la vis de réglage 603. Cette vis d'arrêt 604 est creuse, pour permettre d'accéder avec un outil adéquat à la vis de réglage 603, et cette vis d'arrêt 604 forme une butée haute d'arrêt pour la vis de réglage 603 ; une butée basse d'arrêt pour la de réglage 603 étant formé par un épaulement interne 605 dans l'orifice 615.

La description qui suit porte sur le fonctionnement du second détendeur 6.

La figure 24 illustre une configuration de départ, qui correspond à une configuration verrouillée interdisant la régulation pour le second détendeur 6, avec le système de sécurité 601 en mode fermé. Cette configuration de départ correspond à une configuration à la mise en route (ou au démarrage) du dispositif 1, et également à une configuration après que le système de sécurité 601 se soit fermé automatiquement suite à chute de pression aval en-dessous de la pression seuil basse.

Dans cette configuration de départ :
- la vis de réglage 603 est sur sa butée basse d'arrêt 605, de sorte que le doigt obturateur 602 est en position abaissée ;
- le piston 62 est remonté en direction de la face inférieure du corps aval 61 sous l'action du premier organe de rappel 68, remontant ainsi la tige de soupape 67 de sorte que l'extrémité supérieure ouverte de cette tige de soupape 67 vient en appui contre le doigt obturateur 602 qui bouche alors le canal interne 670 au niveau de cette extrémité supérieure, fermant ainsi la communication entre la chambre basse pression 613 et la chambre haute pression 66.

Dans cette configuration de départ, si une pression amont (en entrée du second détendeur 6) est présente, le système de sécurité 601 restera fermé et le second détendeur 6 restera fermé, et seul un réarmement automatiquement permettra de remettre en fonctionnement ce second détendeur 6.

La figure 25 illustre une configuration déverrouillée en première phase de réarmement, dans laquelle :
- la vis de réglage 603 est remontée en butée sur la vis d'arrêt 604 ;
- le piston 62 est remonté jusqu'à venir en butée sur la face inférieure du corps aval 61 sous l'action du premier organe de rappel 68, exerçant ainsi une poussée sur le doigt obturateur 602 qui est libre de remonter en direction de sa position relevée (sans nécessairement atteindre complètement sa position relevée) ;
- la liaison avec l'organe de soutirage au niveau du raccord de soutirage 25 est fermée, afin qu'une pression aval (pression dans la chambre basse pression 613) puisse s'établir.

La figure 26 illustre une configuration déverrouillée en seconde phase de réarmement, dans laquelle :
- une pression amont (en entrée du second détendeur 6 ou pression dans la chambre haute pression 66) est appliquée (notamment après ouverture de la vanne 40) ;
- sous l'effet de cette pression amont, le doigt obturateur 602 est poussé vers sa position relevée de sorte que le doigt obturateur 602 n'est plus en butée sur l'extrémité supérieure ouverte de la tige de soupape 67, et que la communication est rétablie entre la chambre basse pression 613 et la chambre haute pression 66 ;
- le clapet de régulation 672 est en position aval d'ouverture et la détente s'effectue au niveau du siège de détente 652, le gaz passant dans le canal interne 670 de la tige de soupape 67 pour atteindre la chambre basse pression 613 ;
- la pression dans la chambre basse pression 613 agit sur le piston 62 dans le sens d'un décollement vis-à-vis du corps aval 61, de sorte que la régulation s'établit dans le second détendeur 6 ; et
- le clapet de décharge 671 est en en position amont de fermeture sous l'action du second organe de rappel 69.

La figure 27 illustre une configuration ouverte de régulation, dans laquelle :
- la liaison avec l'organe de soutirage au niveau du raccord de soutirage 25 est ouverte ;
- la vis de réglage 603 est descendue sur sa butée basse d'arrêt 605, de sorte que le doigt obturateur 602 est amené en position abaissée ;
- sous l'effet de la pression aval (dans la chambre basse pression 613), le piston 62 est suffisamment éloigné du corps aval 61 pour que le doigt obturateur 602 ne vienne pas en butée sur l'extrémité supérieure ouverte de la tige de soupape 67, en effet l'écart de jeu entre la course de la vis de réglage 603 et la course du piston 62 est prévu pour que le doigt obturateur 602 ne bouche pas cette extrémité supérieure ouverte de la tige de soupape 67 dans la configuration ouverte de régulation.

Si la pression aval (pression dans la chambre basse pression 613) passe en-dessous d'une pression seuil basse (traduisant pour rappel un surdébit en sortie et donc une fuite en aval), le piston 62 remonte (sous l'effet du premier organe de rappel 68) jusqu'à ce que le doigt obturateur 602 vienne en butée sur l'extrémité supérieure ouverte de la tige de soupape 67, et le second détendeur 6 retourne dans la configuration de départ de la figure 24.

Si la pression aval (pression dans la chambre basse pression 613) dépasse une seconde pression seuil prédéfinie (qui dépend des surfaces d'appui du gaz et des coefficients de rappel des organes de rappel 68, 69), alors le fonctionnement est similaire à celui du premier détendeur 5, à savoir que :
- la surpression dans la chambre basse pression 613 agit sur le piston 62 dans le sens d'un décollement vis-à-vis du corps aval 61 suffisant pour que le clapet de régulation 672 soit en position amont de fermeture, sous l'effet du second organe de rappel 69 qui pousse la tige de soupape 67 ;
- la tige de soupape 67 étant en butée sur le siège de détente 652 et le piston 62 étant suffisamment écarté du corps aval 61, le clapet de décharge 671 décolle du siège de décharge 621 et passe ainsi en position aval d'ouverture, autorisant la communication entre la chambre basse pression 613 et la conduite de décharge 15 raccordée au circuit de fuite 10, et ainsi la décharge s'effectue dans le circuit de fuite 10 et la pression aval est relâchée.

Dans ce second détendeur 6, le clapet de décharge 671, le siège de décharge 671 et le second organe de rappel 69 forment ensemble la soupape de décharge 60 évoquée précédemment en référence à la figure 1.

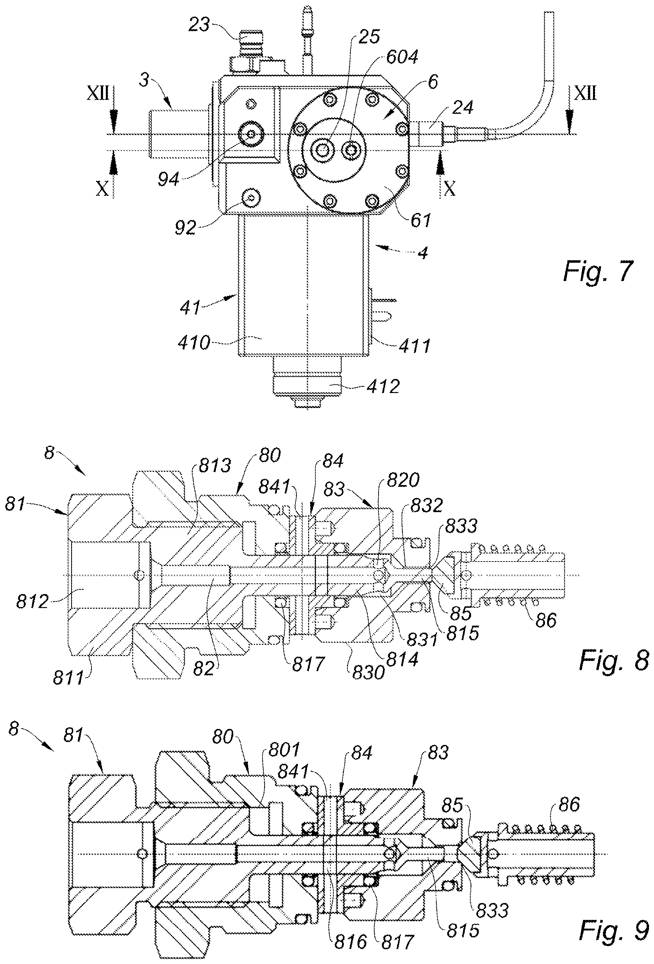

Le raccord de remplissage 8 est décrit ci-après en référence aux figures 8 et 9.

Ce raccord de remplissage 8 comprend un corps amont 80 creux statique formant un couvercle ou bouchon accessible de l'extérieur et muni d'un filetage externe 800 pour une fixation par vissage dans le corps 13, ce corps 80 creux présentant un filetage interne 801 prolongé par un trou central 802.

Ce raccord de remplissage 8 comprend un piston 81 vissé dans le filetage interne 801 du corps amont 80 et présentant intérieurement une conduite de remplissage 82.

Ce piston 81 présente successivement :
- une portion de préhension 811 permettant une saisie manuelle ou avec un outillage adéquat, afin de visser/dévisser le piston 81, et dans laquelle est prévue une prise femelle 812, en communication avec la conduite de remplissage 82, prévue pour une liaison avec une prise mâle de la source de gaz SO ;
- une portion filetée 813 vissée dans le filetage interne 801 du corps amont 80 ;
- une portion lisse 814 ; et
- une portion d'extrémité 815 formant un doigt de poussée.

La conduite de remplissage 82 débouche au bout de la portion lisse 814, avant la portion d'extrémité 814, via des trous périphériques 820.

Cette portion lisse 814 présente également au moins un orifice de purge 816 débouchant transversalement dans la conduite de remplissage 82, à distance des trous périphériques 820.

Ce raccord de remplissage 8 comprend un corps aval 83 statique muni d'un filetage externe 830 pour une fixation par vissage dans le corps 13, et plus spécifiquement une fixation au fond de l'alésage correspondant, jusqu'à ce que ce corps aval 83 soit en butée sur un épaulement interne de l'alésage.

Ce corps aval 83 présente un canal interne ayant successivement :
- une partie amont 831 élargie à l'intérieur de laquelle débouche la conduite de remplissage 82 via les trous périphériques 820 ; et
- une partie aval 832 rétrécie traversée par la portion d'extrémité 815, cette partie aval 832 ayant une extrémité aval formant un siège 833.

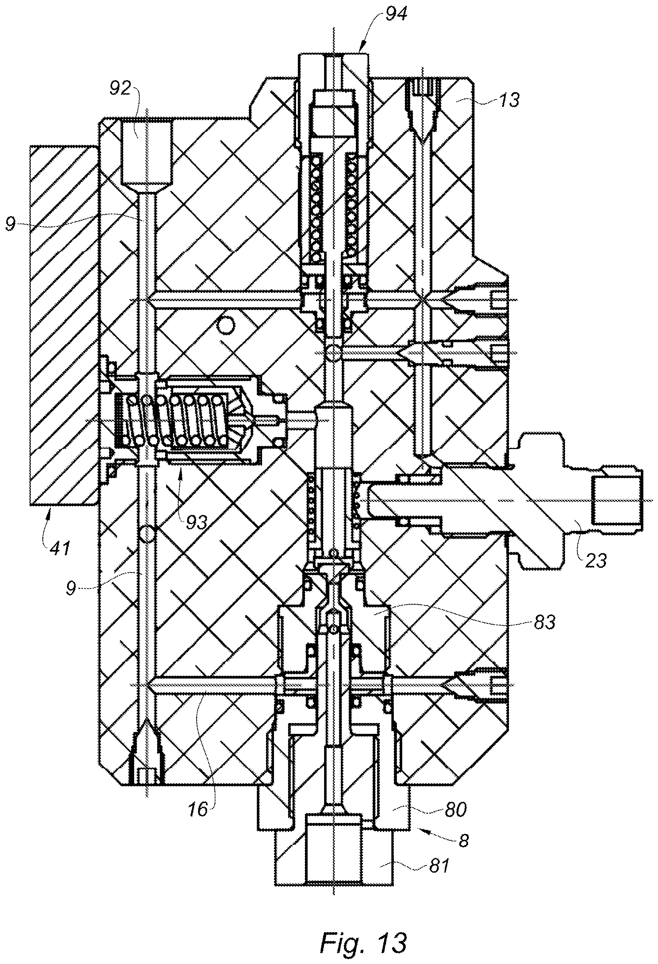

Ce raccord de remplissage 8 comprend un corps de purge 84 intercalé entre le corps amont 80 et le corps aval 83 et présentant au moins une conduite de purge 841 raccordée au circuit de fuite 10 ou au circuit de sécurité 9 via une canalisation de purge 16 ménagée dans le corps 13 et visible sur la figure 13. Cette conduite de purge 841 débouche en périphérie de la portion lisse 814 du piston 81, entre deux joints d'étanchéité 817 montés autour de cette portion lisse 814 dans le corps amont 80 et le corps aval 83 respectivement.

Ce raccord de remplissage 8 comprend en outre un clapet d'isolement 85 mobile relativement au siège 833, à l'intérieur de l'alésage du corps 13, entre :
- une position amont de fermeture de la conduite de remplissage 82 (visible sur la figure 9) où le clapet d'isolement 85 est en appui sur le siège 833, coupant ainsi la communication entre la conduite de remplissage 82 et l'extrémité amont 72 du circuit de remplissage 7 ;
- une position aval d'ouverture de la conduite de remplissage 82 (visible sur la figure 8) où le clapet d'isolement 85 est décollé vis-à-vis du siège 833, établissant ainsi la communication entre la conduite de remplissage 82 et l'extrémité amont 72 du circuit de remplissage 7.

Ce raccord de remplissage 8 comprend également un organe de rappel 86, notamment du type ressort hélicoïdal, qui sollicite le clapet d'isolement 85 en direction de la position amont de fermeture.

Le piston 81 est déplaçable par vissage/dévissage sélectivement entre une position d'ouverture (illustrée sur la figure 8) et une position de fermeture (illustrée sur la figure 9).

De manière générale, le piston 81 est déplaçable par toute action mécanique garantissant un déplacement en translation du piston entre sa position d'ouverture et sa position de fermeture, où le piston 81 reste connecté de manière étanche dans le corps amont 80. A titre d'exemple de variante, le piston 81 peut être déplaçable avec un mécanisme à quart de tour ou autre mécanisme équivalent.

Dans la position d'ouverture :
- le piston 81 est vissé vers l'aval de sorte que la portion d'extrémité 815 exerce une poussée sur le clapet d'isolement 85, à l'encontre de l'organe de rappel 86, vers sa position d'ouverture ; et
- l'orifice de purge 816 prévu sur le piston 81 ne coïncide pas avec la conduite de purge 841 prévue sur le corps de purge 84.

Dans la position de fermeture :
- le piston 81 est dévissé vers l'amont de sorte que la portion d'extrémité 815 est éloignée du clapet d'isolement 85 qui est sollicité par l'organe de rappel 86 vers sa position de fermeture ; et
- l'orifice de purge 816 prévu sur le piston 81 coïncide avec la conduite de purge 841 prévue sur le corps de purge 84 pour établir une communication entre la conduite de remplissage 82 et le circuit de fuite 10 ou le circuit de sécurité 9.

Ainsi, en fonctionnement, le piston 81 est dans sa position de fermeture et la source de gaz sa est connectée à la prise femelle 812, puis le piston 81 est vissé vers sa position d'ouverture et la source de gaz sa est ouverte pour remplir le récipient de stockage RE.

A la fin du remplissage, la source de gaz sa est fermée, le piston 81 est dévissé vers sa position de fermeture de sorte qu'intervient une dépressurisation automatique de la conduite de remplissage 82 à travers l'orifice de purge 816 vers le circuit de fuite 10 ou le circuit de sécurité 9, et enfin la source de gaz sa est déconnectée de la prise femelle 812.

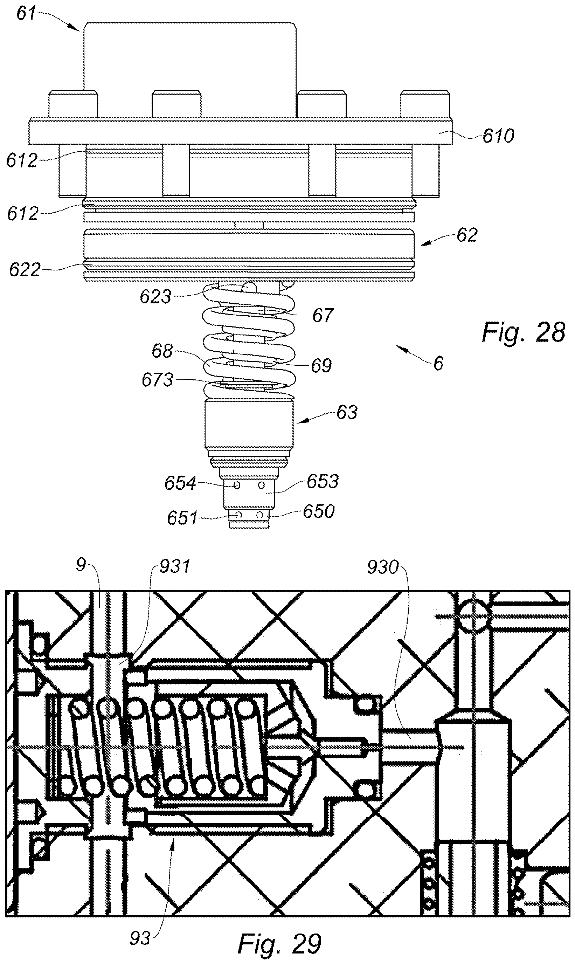

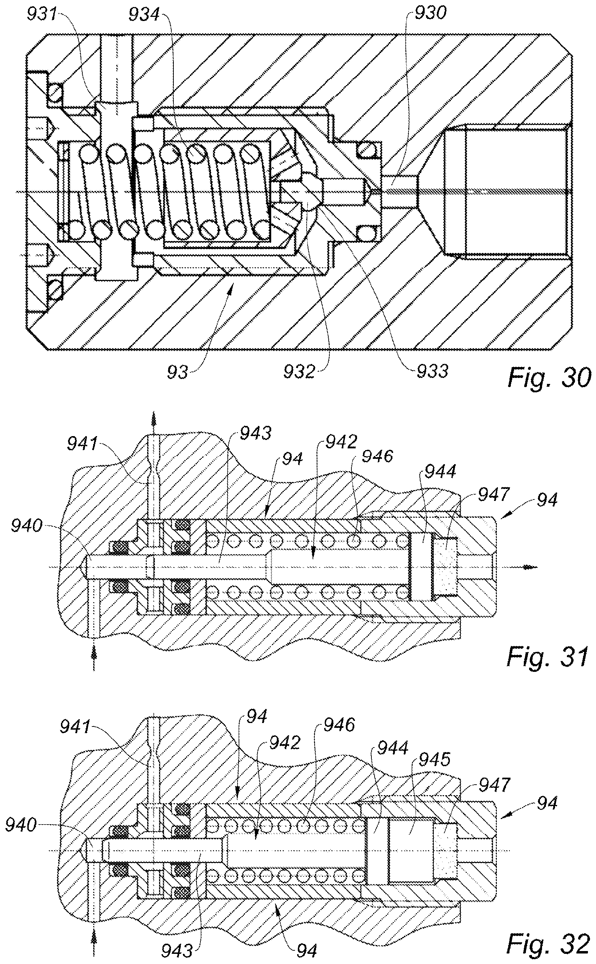

En référence aux figures 29 et 30, la soupape de sécurité haute pression 93 présente :
- une entrée 930 raccordée à l'extrémité amont 21 du circuit de soutirage 2, autrement dit raccordée à la sortie du raccord de remplissage 8 et à la conduite principale 31 du raccord de stockage 3 ;
- une sortie 931 raccordée à l'extrémité amont 92 du circuit de fuite 9 (ou point de collecte sur l'extérieur).

La soupape de sécurité haute pression 93 comprend un clapet 932 en appui sur un siège 933 ouvert sur l'entrée, sous l'effet d'un organe de rappel 934.

Si la pression à l'entrée 930 dépasse une valeur seuil supérieure à la pression maximale prévue dans le récipient de stockage RE (valeur seuil par exemple de l'ordre de 730 à 780 bars), le clapet 932 s'ouvre sous l'effet de cette pression élevée et met en communication l'entrée 930 et la sortie 931. Cette soupape de sécurité haute pression 93 a ainsi pour fonction d'évacuer vers l'extérieur le gaz en cas de pression excessive dans le dispositif 1.

En référence aux figures 31 et 32, la soupape de sécurité haute température 94 présente :
- une entrée 940 raccordée à l'extrémité amont 21 du circuit de soutirage 2, autrement dit raccordée à la sortie du raccord de remplissage 8 et à la conduite principale 31 du raccord de stockage 3 ;
- une sortie 941 raccordée à l'extrémité amont 92 du circuit de fuite 9 (ou point de collecte sur l'extérieur), cette sortie 93 étant munie d'un rétrécissement formant un orifice calibré de limitation du débit.

La soupape de sécurité haute température 94 comporte un piston 942 munie d'une tige 943 qui coupe la communication entre l'entrée 940 et la sortie 941, et une embase 944 en appui sur une pastille fusible thermiquement 945, elle-même en appui sur un écran en métal fritté 947.

Un organe de rappel 946 prend appui sur l'embase 944 pour solliciter le piston 942 contre la pastille fusible thermiquement 945.

Comme visible sur la figure 32, si la température est inférieure à une valeur seuil (par exemple de l'ordre de 90 et 120 °C), la pastille fusible thermiquement 945 n'est pas fondue et la tige 943 coupe la communication entre l'entrée 940 et la sortie 941, de sorte que la soupape de sécurité haute température 94 est fermée.

Comme visible sur la figure 31, si la température est supérieure à la valeur seuil, la pastille fusible thermiquement 945 est fondue et la tige 943 est sollicitée par l'organe de rappel 946 et/ou par la pression en entrée 940, dans le sens d'une ouverture de la communication entre l'entrée 940 et la sortie 941, de sorte que la soupape de sécurité haute température 94 est ouverte.

En référence à la figure 19, la soupape de sécurité basse pression 12 présente :
- une entrée 120 raccordée à l'extrémité aval 22 du circuit de soutirage 2 ; et
- une sortie 121 d'échappement raccordée au circuit de fuite 10 en amont du clapet anti-retour 11.

La soupape de sécurité basse pression 12 comprend un clapet 122 en appui sur un siège 123 ouvert sur l'entrée 120, sous l'effet d'un organe de rappel 124. Si la pression à l'entrée 120 dépasse une valeur seuil supérieure à la pression maximale prévue dans l'organe de soutirage (valeur seuil par exemple de l'ordre de 2 à 5 bars), le clapet 122 s'ouvre sous l'effet de cette pression et met en communication l'entrée 120 et la sortie 121. Cette soupape de sécurité basse pression 12 a ainsi pour fonction d'évacuer vers l'extérieur le gaz en cas de pression excessive dans l'organe de soutirage.

Il est à noter que le dispositif 1 peut se passer de cette soupape de sécurité basse pression 12 si celle-ci est redondante avec une soupape de sécurité intégrée à l'organe de soutirage. Bien entendu, si l'organe de soutirage a sa propre soupape de sécurité, la soupape de sécurité basse pression 12 peut tout de même est présente dans le dispositif 1.

Le dispositif 1 décrit ci-dessus présente ainsi de nombreux avantages en termes de :
- qualité et précision de la régulation, grâce à deux détendeurs 5, 6 en série qui permettent une détente sur deux étages ;
- sécurité en cas de dysfonctionnements ou d'incidents, grâce notamment aux soupapes de décharge 50, 60 intégrées dans les détendeurs 5, 6, au système de sécurité 601 et aux autres systèmes de sécurité dont la soupape de sécurité haute pression 93 et la soupape de sécurité haute température 94 ;
- sécurité lors des opérations de remplissage grâce au raccord de remplissage 8 qui intègre une fonction de dépressurisation (ou purge) automatique lors du désaccouplement entre le raccord de remplissage et la source de gaz sous pression ;
- sécurité vis-à-vis des fuites grâce à un circuit de fuite 10 qui collecte les conduites de fuite, de décharge et de purge 14, 15, 16, 17, 18, 32, qui sont systématiquement encadrées par deux joints d'étanchéité formant des doubles barrières d'étanchéité particulièrement efficaces pour garantir une absence de fuite dans le dispositif 1 vers l'extérieur, l'amont et l'aval ;
- compacité et légèreté avec un corps 13 optimisé pour accueillir les nombreux organes dans des alésages adéquats et les nombreuses canalisations et conduites des différents circuits 2, 7, 9 et 10.

## Revendications

1. Dispositif (1) de remplissage et de soutirage de gaz, comprenant :
- un circuit de soutirage (2) comprenant une extrémité amont (21) munie d'un raccord de stockage (3) conformé pour un raccordement avec un récipient de stockage (RE) d'un gaz sous pression, et une extrémité aval (22) munie d'un raccord de soutirage (25) conformé pour un raccordement avec un organe de soutirage du gaz à pression réduite, où ledit circuit de soutirage (2) comprend au moins une vanne d'isolation pilotée (4) et au moins un détendeur (5 ; 6) ;
- un circuit de remplissage (7) comprenant une extrémité amont (71) munie d'un raccord de remplissage (8) conformé pour un raccordement avec une source de gaz (SO) sous pression pour le remplissage du récipient de stockage (RE), et une extrémité aval (72) raccordée à l'extrémité amont (21) du circuit de soutirage (2) ;
ledit dispositif étant **caractérisé en ce que** le raccord de remplissage (8) comprend un piston (81) définissant intérieurement une conduite de remplissage (82) et présentant au moins un orifice de purge (816) débouchant transversalement dans ladite conduite de remplissage (82), où ledit piston (81) est mobile au moins à l'intérieur d'un corps de purge (84) muni d'une conduite de purge (841) raccordée à un circuit de fuite (10) reliée à l'extérieur (EXT), ladite conduite de purge (841) débouchant en périphérie du piston (81) entre deux joints d'étanchéité (817) montés autour du piston (81), ledit piston (81) étant déplaçable sélectivement entre :
- une position d'ouverture établissant une communication entre ladite conduite de remplissage (82) et l'extrémité amont (71) du circuit de remplissage (7), et dans laquelle l'orifice de purge (816) ne coïncide pas avec la conduite de purge (841) ; et
- une position de fermeture coupant la communication entre ladite conduite de remplissage (82) et l'extrémité amont (71) du circuit de remplissage (7), et dans laquelle l'orifice de purge (816) coïncide avec la conduite de purge (841) pour établir une communication entre ladite conduite de remplissage (82) et le circuit de fuite (10).

2. Dispositif (1) selon la revendication 1, dans lequel le raccord de remplissage (8) comprend un clapet d'isolement (85) mobile relativement à un siège (833) entre une position amont de fermeture de la conduite de remplissage (82) et une position aval d'ouverture de la conduite de remplissage (82), où le piston (81) est déplaçable sélectivement entre :
- sa position d'ouverture dans laquelle ledit piston (81) agit sur ledit clapet d'isolement (85) vers sa position aval ; et
- sa position de fermeture dans laquelle ledit piston (81) n'agit pas sur ledit clapet d'isolement (85) qui est sollicité vers sa position amont au moyen d'un organe de rappel (86).

3. Dispositif (1) selon l'une quelconque des revendications 1 à 2, dans lequel le piston (81) est déplaçable par vissage/dévissage.

4. Dispositif (1) selon l'une quelconque des revendications 1 à 3, dans lequel le raccord de stockage (3) comprend une conduite principale (31) raccordée à l'extrémité amont (21) du circuit de soutirage (2) et une conduite de fuite (32) raccordée au circuit de fuite (10) et débouchant entre deux joints d'étanchéité (33, 34) concentriques.

5. Dispositif (1) selon l'une quelconque des revendications 1 à 4, dans lequel le au moins un détendeur (5 ; 6) comprend :
- une chambre haute pression (56 ; 66) en entrée,
- une chambre basse pression (513 ; 613) en sortie,
- une pièce de régulation (52 ; 62) mobile sur laquelle appuie d'un côté le gaz de la chambre basse pression (513 ; 613) et de l'autre côté un organe de rappel (58 ; 68),
- un clapet de régulation (572 ; 672) coopérant avec la pièce de régulation (52 ; 62) et mobile relativement à un siège de détente (552 ; 652) entre une position amont de fermeture de la communication entre la chambre basse pression (513 ; 613) et la chambre haute pression (56 ; 66) et une position aval d'ouverture de la communication entre la chambre basse pression (513 ; 613) et la chambre haute pression (56 ; 66),
où, lorsque la pression du gaz dans la chambre basse pression (513 ; 613) dépasse un seuil prédéfini, le clapet de régulation (572 ; 672) est en position amont et la chambre basse pression (513 ; 613) est mise en communication avec une conduite de décharge (14 ; 15) raccordée au circuit de fuite (10).

6. Dispositif (1) selon la revendication 5, dans lequel le circuit de soutirage (2) comprend deux détendeurs (5, 6) en série, où chaque détendeur (5 ; 6) présente une conduite de décharge (14 ; 15) raccordée au circuit de fuite (10) et mise en communication avec la chambre basse pression (513 ; 613) correspondante lorsque la pression du gaz dans ladite chambre basse pression (513 ; 613) dépasse un seuil prédéfinie propre à chaque détendeur (5 ; 6).

7. Dispositif (1) selon l'une quelconque des revendications 1 à 6, dans lequel le circuit de fuite (10) comprend un clapet anti-retour (11).

8. Dispositif (1) selon l'une quelconque des revendications 1 à 7, dans lequel le circuit de fuite (10) comprend une soupape de sécurité basse pression (12) ayant une entrée (120) raccordée à l'extrémité aval (22) du circuit de soutirage (2), et une sortie (121) d'échappement raccordée au circuit de fuite (10).

9. Dispositif (1) selon l'une quelconque des revendications 1 à 8, comprenant en outre un circuit de sécurité (9) ayant une extrémité amont (91) raccordée à l'extrémité amont (21) du circuit de soutirage (2) et une extrémité aval (92) reliée à l'extérieur (EXT), ledit circuit de sécurité (9) comprenant au moins une soupape de sécurité choisie parmi une soupape de sécurité haute pression (93) et/ou une soupape de sécurité haute température (94).

10. Dispositif (1) selon la revendication 9, dans lequel le circuit de sécurité (9) comprend un robinet de purge (95) avec limiteur de débit, placé en parallèle de la au moins une soupape de sécurité (93 ; 94).

11. Utilisation d'un dispositif (1) selon l'une quelconque des revendications 1 à 10, dans lequel le raccord de stockage (3) est raccordé à un récipient de stockage (RE) d'hydrogène gazeux sous pression et le raccord de soutirage (25) est raccordé à un organe de soutirage du type pile à combustible.

## Patentansprüche

1. Vorrichtung (1) zum Füllen und Entnehmen von Gas, die Folgendes umfasst:
- einen Entnahmekreislauf (2), der ein stromaufwärtiges Ende (21), das mit einem Speicheranschluss (3) versehen ist, der für eine Kopplung mit einem Speicherbehälter (RE) für ein unter Druck stehendes Gas ausgebildet ist, und ein stromabwärtiges Ende (22) umfasst, das mit einem Entnahmeanschluss (25) versehen ist, der für eine Kopplung mit einer Entnahmeeinrichtung zum Entnehmen von Gas mit reduziertem Druck ausgebildet ist, wobei der Entnahmekreislauf (2) mindestens ein angesteuertes Absperrventil (4) und mindestens einen Druckregler (5; 6) umfasst; und
- einen Füllkreislauf (7), der ein stromaufwärtiges Ende (71), das mit einem Füllanschluss (8) versehen ist, der für eine Kopplung mit einer Quelle von unter Druck stehendem Gas (SO) zum Füllen des Speicherbehälters (RE) ausgebildet ist, und ein stromabwärtiges Ende (72) umfasst, das mit dem stromaufwärtigen Ende (21) des Entnahmekreislaufs (2) gekoppelt ist;
wobei die Vorrichtung **dadurch gekennzeichnet ist, dass** der Füllanschluss (8) einen Kolben (81) umfasst, der im Inneren eine Füllleitung (82) definiert und mindestens eine Abflussöffnung (816) aufweist, die quer in die Füllleitung (82) mündet, wobei der Kolben (81) mindestens im Inneren eines Abflusskörpers (84) beweglich ist, der mit einer Abflussleitung (841) versehen ist, die mit einem mit der Außenseite (EXT) verbundenen Leckagekreislauf (10) gekoppelt ist, wobei die Abflussleitung (841) an einem Umfang des Kolbens (81) zwischen zwei Dichtungen (817) mündet, die um den Kolben (81) herum montiert sind, wobei der Kolben (81) selektiv verschiebbar ist zwischen:
- einer offenen Position, die eine Verbindung zwischen der Füllleitung (82) und dem stromaufwärtigen Ende (71) des Füllkreislaufs (7) herstellt, und wobei die Abflussöffnung (816) nicht mit der Abflussleitung (841) zusammenfällt; und
- einer geschlossenen Position, die die Verbindung zwischen der Füllleitung (82) und dem stromaufwärtigen Ende (71) des Füllkreislaufs (7) trennt, und wobei die Abflussöffnung (816) mit der Abflussleitung (841) zusammenfällt, um eine Verbindung zwischen der Füllleitung (82) und dem Leckagekreislauf (10) herzustellen.

2. Vorrichtung (1) nach Anspruch 1, wobei der Füllanschluss (8) eine Absperrventilklappe (85) umfasst, die im Verhältnis zu einem Sitz (833) zwischen einer stromaufwärtigen Position zum Schließen der Füllleitung (82) und einer stromabwärtigen Position zum Öffnen der Füllleitung (82) bewegbar ist, wobei der Kolben (81) selektiv verschiebbar ist zwischen:
- seiner offenen Position, in der der Kolben (81) auf die Absperrventilklappe (85) in Richtung ihrer stromabwärtigen Position wirkt; und
- seiner geschlossenen Position, in der der Kolben (81) nicht auf die Absperrventilklappe (85) einwirkt, die durch ein Vorspannelement (86) in ihre stromaufwärtige Position vorgespannt ist.

3. Vorrichtung (1) nach einem der Ansprüche 1 bis 2, wobei der Kolben (81) durch Einschrauben/Ausschrauben verschiebbar ist.

4. Vorrichtung (1) nach einem der Ansprüche 1 bis 3, wobei der Speicheranschluss (3) eine Hauptleitung (31), die mit dem stromaufwärtigen Ende (21) des Entnahmekreislaufs (2) gekoppelt ist, und eine Leckageleitung (32) umfasst, die mit dem Leckagekreislauf (10) gekoppelt ist und zwischen zwei konzentrischen Dichtungen (33, 34) mündet.

5. Vorrichtung (1) nach einem der Ansprüche 1 bis 4, wobei der mindestens eine Druckregler (5; 6) Folgendes umfasst:
- eine Hochdruckkammer (56; 66) an einem Einlass,
- eine Niederdruckkammer (513; 613) an einem Auslass,
- ein bewegliches Regulierungsbauteil (52; 62), auf dem auf einer Seite das Gas aus der Niederdruckkammer (513; 613) und auf der anderen Seite ein Vorspannelement (58; 68) aufliegt,
- eine Regelventilklappe (572; 672), die mit dem Regulierungsbauteil (52; 62) zusammenwirkt und im Verhältnis zu einem Entspannungssitz (552; 652) zwischen einer stromaufwärtigen Position zum Schließen der Verbindung zwischen der Niederdruckkammer (513; 613) und der Hochdruckkammer (56; 66) und einer stromabwärtigen Position zum Öffnen der Verbindung zwischen der Niederdruckkammer (513; 613) und der Hochdruckkammer (56; 66) beweglich ist,
wobei, wenn der Gasdruck in der Niederdruckkammer (513; 613) einen vordefinierten Schwellenwert überschreitet, die Regelventilklappe (572; 672) in der stromaufwärtigen Position ist und die Niederdruckkammer (513; 613) mit einer mit dem Leckagekreislauf (10) gekoppelten Ablaufleitung (14; 15) in Verbindung gebracht wird.

6. Vorrichtung (1) nach Anspruch 5, wobei der Entnahmekreislauf (2) zwei in Reihe geschaltete Druckregler (5, 6) umfasst, wobei jeder Druckregler (5; 6) eine Ablaufleitung (14; 15) aufweist, die mit dem Leckagekreislauf (10) gekoppelt ist und mit der entsprechenden Niederdruckkammer (513; 613) in Verbindung steht, wenn der Gasdruck in der Niederdruckkammer (513; 613) einen für jeden Druckregler (5; 6) spezifischen vordefinierten Schwellenwert überschreitet.

7. Vorrichtung (1) nach einem der Ansprüche 1 bis 6, wobei der Leckagekreislauf (10) eine Rückschlagventilklappe (11) umfasst.

8. Vorrichtung (1) nach einem der Ansprüche 1 bis 7, wobei der Leckagekreislauf (10) ein Niederdruck-Sicherheitsventil (12) umfasst, das einen Einlass (120), der mit dem stromabwärtigen Ende (22) des Entnahmekreislaufs (2) gekoppelt ist, und einen Auslass (121) aufweist, der mit dem Leckagekreislauf (10) gekoppelt ist.

9. Vorrichtung (1) nach einem der Ansprüche 1 bis 8, die ferner einen Sicherheitskreislauf (9) umfasst, der ein stromaufwärtiges Ende (91), das mit dem stromaufwärtigen Ende (21) des Entnahmekreislaufs (2) gekoppelt ist, und ein stromabwärtiges Ende (92) aufweist, das mit der Außenseite (EXT) verbunden ist, wobei der Sicherheitskreislauf (9) mindestens ein Sicherheitsventil umfasst, das aus einem Hochdruck-Sicherheitsventil (93) und/oder einem Hochtemperatur-Sicherheitsventil (94) ausgewählt wird.

10. Vorrichtung (1) nach Anspruch 9, wobei der Sicherheitskreislauf (9) einen Abflusshahn (95) mit einem Durchflussbegrenzer umfasst, der parallel zu dem mindestens einen Sicherheitsventil (93; 94) angeordnet ist.

11. Verwendung einer Vorrichtung (1) nach einem der Ansprüche 1 bis 10, wobei der Speicheranschluss (3) mit einem Speicherbehälter (RE) für unter Druck stehendes Wasserstoffgas gekoppelt ist und der Entnahmeanschluss (25) mit einer Entnahmeeinrichtung vom Brennstoffzellentyp gekoppelt ist.

## Claims

1. A device (1) for filling and withdrawing gas, comprising:
- a withdrawing circuit (2) comprising an upstream end (21) provided with a storage connector (3) configured for a connection with a storage container (RE) of a pressurized gas, and a downstream end (22) provided with a withdrawing connector (25) configured for a connection with a withdrawing device for withdrawing gas at reduced pressure, wherein said withdrawing circuit (2) comprises at least one driven isolation gate (4) and at least one pressure regulator (5; 6);
- a filling circuit (7) comprising an upstream end (71) provided with a filling connector (8) configured for a connection with a source of pressurized gas (SO) for filling the storage container (RE), and a downstream end (72) connected to the upstream end (21) of the withdrawing circuit (2);
said device being **characterized in that** the filling connector (8) comprises a piston (81) internally defining a filling duct (82) and having at least one drain orifice (816) opening transversely into said filling duct (82), wherein said piston (81) is movable at least inside a drain body (84) provided with a drain duct (841) connected to a leakage circuit (10) connected to the outside (EXT), said drain duct (841) opening out at the periphery of the piston (81) between two seals (817) mounted around the piston (81), said piston (81) being selectively displaceable between:
- an open position establishing communication between said filling duct (82) and the upstream end (71) of the filling circuit (7), and wherein the drain orifice (816) does not coincide with the drain duct (841); and
- a closed position cutting off the communication between said filling duct (82) and the upstream end (71) of the filling circuit (7), and wherein the drain orifice (816) coincides with the drain duct (841) to establish communication between said filling duct (82) and the leakage circuit (10).

2. The device (1) according to claim 1, wherein the filling connector (8) comprises an isolation flap (85) movable relative to a seat (833) between an upstream position for closing the filling duct (82) and a downstream position for opening the filling duct (82), wherein the piston (81) is selectively displaceable between:
- its open position wherein said piston (81) acts on said isolation flap (85) towards its downstream position; and
- its closed position wherein said piston (81) does not act on said isolation flap (85) which is biased towards its upstream position by means of a biasing member (86).

3. The device (1) according to any one of claims 1 to 2, wherein the piston (81) is displaceable by screwing/unscrewing.

4. The device (1) according to any one of claims 1 to 3, wherein the storage connector (3) comprises a main conduit (31) connected to the upstream end (21) of the withdrawing circuit (2) and a leakage conduit (32) connected to the leakage circuit (10) and opening between two concentric seals (33, 34).

5. The device (1) according to any one of claims 1 to 4, wherein the at least one pressure regulator (5; 6) comprises:
- a high pressure chamber (56; 66) at the inlet,
- a low pressure chamber (513; 613) at the outlet,
- a movable regulation part (52; 62) on which the gas from the low pressure chamber (513; 613) bears on one side and a biasing member (58; 68) on the other side,
- a regulating flap (572; 672) cooperating with the regulation part (52; 62) and movable relative to an expansion seat (552; 652) between an upstream position for closing the communication between the low pressure chamber (513 ; 613) and the high pressure chamber (56; 66) and a downstream position for opening the communication between the low pressure chamber (513; 613) and the high pressure chamber (56; 66),
wherein, when the gas pressure in the low pressure chamber (513; 613) exceeds a predefined threshold, the regulating flap (572; 672) is in the upstream position and the low pressure chamber (513; 613) is brought into communication with a discharge conduit (14; 15) connected to the leakage circuit (10).

6. The device (1) according to claim 5, wherein the withdrawing circuit (2) comprises two pressure regulators (5, 6) in series, wherein each pressure regulator (5; 6) has a discharge conduit (14; 15) connected to the leakage circuit (10) and placed in communication with the corresponding low pressure chamber (513; 613) when the gas pressure in said low pressure chamber (513; 613) exceeds a predefined threshold specific to each pressure regulator (5; 6).

7. The device (1) according to any one of claims 1 to 6, wherein the leakage circuit (10) comprises a check valve (11).

8. The device (1) according to any one of claims 1 to 7, wherein the leakage circuit (10) comprises a low pressure safety valve (12) having an inlet (120) connected to the downstream end (22) of the withdrawing circuit (2), and an exhaust outlet (121) connected to the leakage circuit (10).

9. The device (1) according to any one of claims 1 to 8, further comprising a safety circuit (9) having an upstream end (91) connected to the upstream end (21) of the withdrawing circuit (2) and a downstream end (92) connected to the outside (EXT), said safety circuit (9) comprising at least one safety valve selected from a high pressure safety valve (93) and/or a high temperature safety valve (94).

10. The device (1) according to claim 9, wherein the safety circuit (9) comprises a drain tap (95) with a flow limiter, placed in parallel with the at least one safety valve (93; 94).

11. A use of a device (1) according to any one of claims 1 to 10, wherein the storage connector (3) is connected to a storage container (RE) of pressurized hydrogen gas and the withdrawing connector (25) is connected to a withdrawing device of a fuel cell type.
